# EUROPEAN PATENT SPECIFICATION

(11) **EP 0 349 329 B1**
(45) Date of publication and mention of the grant of the patent: **28.12.1994**
(21) Application number: 89306636.5
(22) Date of filing: 29.06.1989
(51) Int. Cl.: G11B 15/66, G11B 15/675, G11B 15/68

(54) **Cassette loading apparatus in recording and reproducing apparatus**
Kassettenladevorrichtung in einem Aufnahme- und Wiedergabegerät
Système de chargement de cassette dans un appareil d'enregistrement et de reproduction

(30) Priority: 01.07.1988 JP 165424/88; 01.07.1988 JP 165425/88; 27.01.1989 JP 17958/89
(43) Date of publication of application: 03.01.1990
(73) Proprietor: MATSUSHITA ELECTRIC INDUSTRIAL CO., LTD., Kadoma-shi, Osaka-fu, 571 (JP)
(72) Inventor: Kishimoto, Yoshinobu, Takarazuka-shi (JP)
(74) Representative: Sorrell, Terence Gordon

(56) References cited:
- EP-A- 0 091 808
- PATENT ABSTRACTS OF JAPAN, unexamined applications, P field, vol. 9, no. 2,January 8, 1985 THE PATENT OFFICE JAPANESE GOVERNMENT page 50 P 325
- PATENT ABSTRACTS OF JAPAN, unexamined applications, P field, vol. 9, no. 54,March 8, 1985 THE PATENT OFFICE JAPANESE GOVERNMENT page 77 P 340
- PATENT ABSTRACTS OF JAPAN, unexamined applications, P field, vol. 8, no. 183,August 23, 1984 THE PATENT OFFICE JAPANESE GOVERNMENT page 13 P 296

## Description

The present invention relates to a cassette loading apparatus of the front loading type for use in a magnetic tape cassette recording and reproducing apparatus.

In recent years, cassette loading apparatii of the front loading type in which a cassette is inserted from the front have been most commonly used in cassette tape recording and reproducing apparatii such as video tape recorders (hereinafter, referred to as a VTR). An example of such a cassette loading apparatus will be explained below with reference to the accompanying drawings.

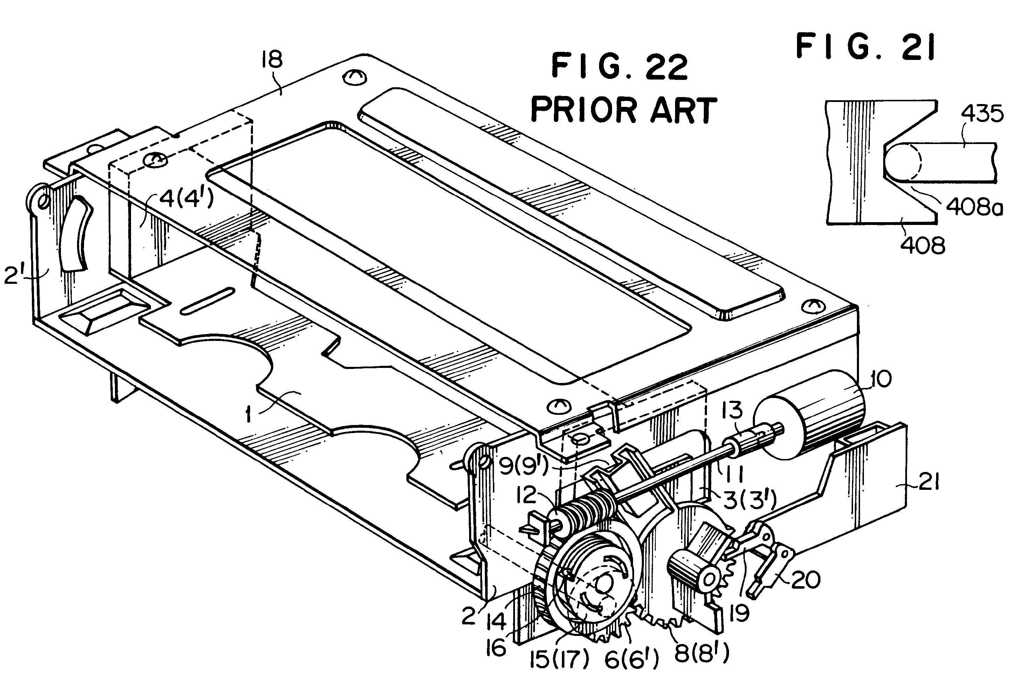

Figure 22 shows a construction of a conventional cassette loading apparatus.

In Figure 22, reference numeral 1 denotes a cassette holder for holding a cassette; 2 and 2′, side plates disposed on both sides of the cassette holder 1; and 3 and 3′, L-shaped guide grooves respectively formed in the side plates 2, 2′, each usually consisting of two or three grooves. Reference numerals 4 and 4′ denote side wall members provided integrally on both sides of the cassette holder 1. Guide pins 5, 5′ engaged with the guide grooves 3, 3′ formed in the side plates 2, 2′ are respectively provided on the side wall members 4, 4′. Reference numerals 6 and 6′ denote transmission gears which are connected to each other by a shaft 7 which is rotatably supported by the side plates 2, 2′, and numerals 8 and 8′ denote rotatable drive arms which are each provided with a gear in meshing engagement with a respective transmission gear 6, 6′, the drive arms 8, 8′ being pivotally supported by their respective side plates 2, 2′. Guide grooves 9, 9′ formed in the forward ends of the drive arms 8, 8′ are adapted to engage with the main guide pins 5, 5′ respectively provided on the side wall members 4, 4′ of the cassette holder 1. A reference numeral 10 denotes a drive motor secured to the side plate 2, and a numeral 11 denotes a shaft which has a worm 12 and is connected to an output shaft of the drive motor 10 through a coupling 13 while being rotatably supported by the side plate 2. A reference numeral 14 denotes a worm wheel which is in meshing engagement with the worm 12, and a numeral 15 denotes a clutch disc which is connected to the worm wheel 14 by means of a coiled torsion spring 16 so as to be rotatable relative to each other while being rotatably supported by a shaft depending from the side plate 2. The worm wheel 14 is rotatably mounted on the shaft sleeve portion of the clutch disc 15 and, further, a pinion 17 is press-fitted to the shaft sleeve portion of the clutch disc 15 so as to be united therewith while holding the worm wheel 14 therebetween. Further, the pinion 17 is in meshing engagement with the transmission gear 6. A reference numeral 18 denotes a top plate connecting the side plates 2, 2′. Reference numerals 19 and 20 denote switch elements attached to the side plate 2 through a metal fitting 21, the switch elements serving to detect the start and finish of the rotational movement of the drive arm 8 and usually requiring positional adjustment.

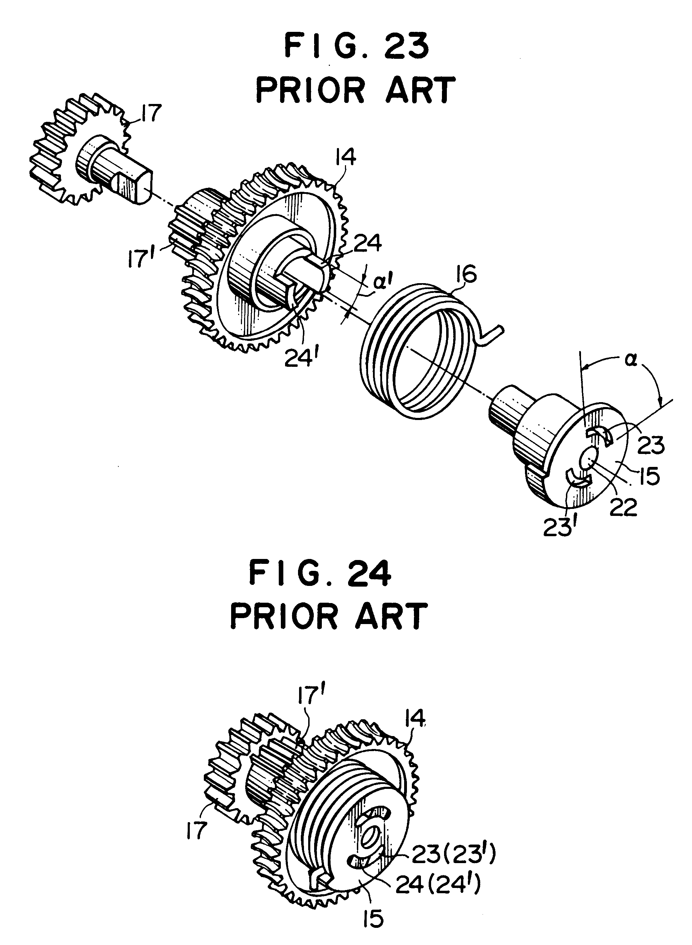

Figures 23 and 24 show details of the construction of the clutch disc 15. More specifically, the clutch disc 15 has formed therein first engaging portions (hereinafter, referred to as elongated holes) 23, 23′ of crescent form such that they each extend over a predetermined angle and are oppositely arranged on a circle concentric with an axial hole 22, and second engaging portions (hereinafter, referred to as projections) 24, 24′ formed integrally with the worm wheel 14 such that they are opposite to each other about the centre of the wheel 14, the elongated holes 23, 23′ being respectively engaged with the projections 24, 24′. Meanwhile, one end of the spring 16 is engaged with the worm wheel 14 and its other end with the clutch disc 15 so as to establish a positional relationship between the elongated holes 23, 23′ and the projections 24, 24′ as indicated by solid lines. Accordingly, the worm wheel 14 and the clutch disc 15 are allowed to rotate with respect to each other against the spring 16 by an amount corresponding to the difference between the opening angle α of an elongated hole 23, 23′ and the angular width α′ of a projection 24, 24′, that is, α-α′. A reference numeral 17′ denotes a partially-toothless gear provided on the worm wheel 14. The construction such as shown in Figure 23 aims to provide an improved operation user sensitivity.

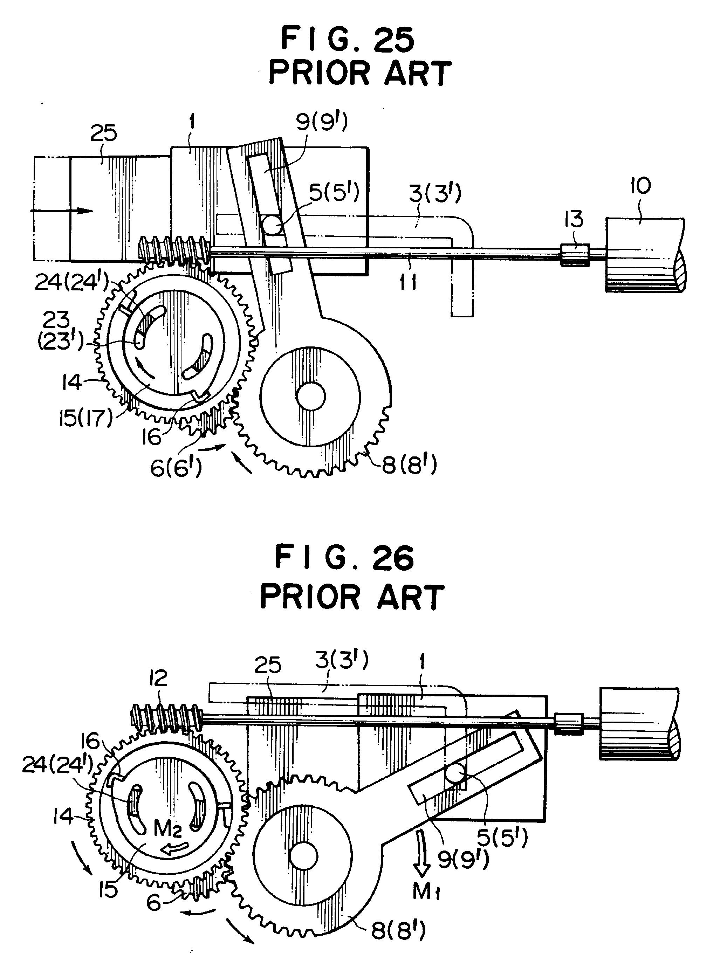

Figures 25 to 27 are views for explaining the operation of the conventional apparatus described above. Referring to Figure 25, the apparatus is designed such that, before the motor 10 starts to rotate due to actuation of a switch upon the insertion of a cassette 25, or when the cassette 25 is inserted when the power switch is turned off, only the transmission gear 6 in meshing engagement with the drive arm 8 engaged with the cassette holder 1 and the clutch disc 15 in meshing engagement with the transmission gear 6 are allowed to rotate relative to the worm wheel 14 in its locked state within the range α-α′ mentioned above. For this reason, in the case where the power switch is turned on, as the cassette holder 1 holding the cassette 25 is slightly pushed against the spring 16, the switch circuit is operated to cause the drive motor 10 to start rotating and, accordingly, the worm wheel 14 is made to rotate through the worm 12, so that the projections 24, 24′ of the worm wheel 14 push the end surfaces of the elongated holes 23, 23′ of the clutch disc 15. Consequently, the drive arms 8, 8′ are rotated through the intermediary of the transmission gears 6, 6′, one of which is in meshing engagement with the pinion 17 provided on the clutch disc 15, so that the cassette holder 1, which is provided with the guide pins 5, 5′ respectively engaged with the guide grooves 9, 9′ formed in the drive arms 8, 8′ is caused to move horizontally and then vertically along the L-shaped guide grooves 3, 3′ formed in the side plates 2, 2′, thus completing the cassette loading operation.

On the other hand, in the case where the power switch is turned off, it is possible by inserting a cassette 25 to push the cassette holder 1 against the spring 16 by a distance corresponding to the angle of rotation, α-α′, mentioned above. Further pushing beyond that distance results in the generation of a strong reaction force since the worm wheel 14 is in its locked state. Therefore, if the user removes his hand, the cassette holder 1 is returned to its original position by the reaction force of the spring 16.

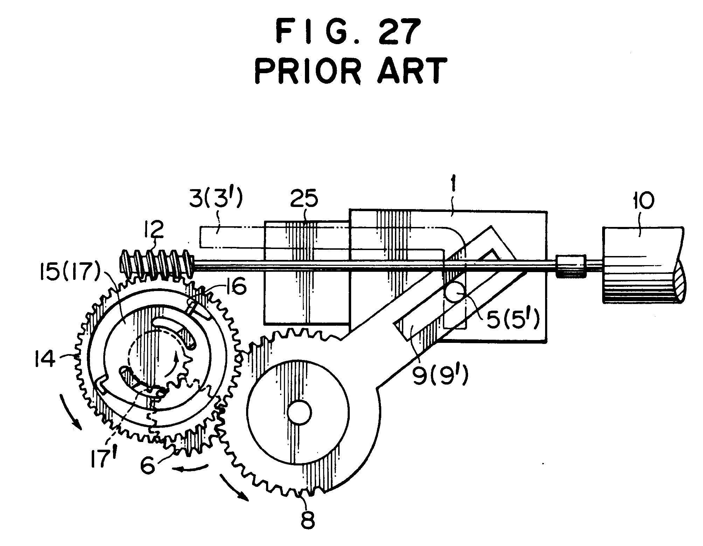

Next, referring to figure 26, in the case of the ejection mode after the cassette has been loaded, the drive motor 10 is reversely rotated but the relationship between the clutch disc 15 and the worm wheel 14 is such that the clutch disc 15 is pulled up by the worm wheel 14 through the spring 16. For this reason, since load torque M₁ which is usually developed for vertically pulling up the cassette holder 1 holding the cassette 25 is applied from the drive arm 8 to the clutch disc 15 via the transmission gear 6 and the pinion 17, it is necessary that a set torque M₂ of the spring 16 is larger than M₁. However, this large torque M₂ causes an extremely large reaction force to be developed upon insertion of a cassette 25 by a user prior to the drive motor 10 starting to rotate on actuation of the switch upon said insertion of the cassette 25 and, hence, results in poor operating sensitivity, so that it is necessary to have a suitable setting for the spring. In addition, the moving range of the cassette holder 1 which corresponds to the angle of rotation, α-α′, of the drive arms 8, 8′ is set within the horizontal movement section. Further, if an overload is applied when the cassette holder 1 is vertically lifted for effecting the ejection operation, the drive arms 8, 8′ and hence the cassette holder 1 driven by the drive arms remain in their locked states. In this case, it is only after the worm wheel 14 alone is rotated against the spring 16 until the torque exerted by the spring 16 is in equilibrium with the load torque or through the angular distance corresponding to the angle of rotation, α-α′, mentioned above, that the clutch disc 15 and the follower members are at last allowed to start rotating. Although there is a premise that the motor torque is greater than the load torque, it cannot be expected, on all occasions, to operate smoothly under such conditions. Accordingly, in order to solve the problems described above, there is known an arrangement in which, as shown in Figure 27, the partially-toothless gear 17′ provided on the worm wheel 14 has the same diameter as the pinion 17 united with the clutch disc 15 so that it can be brought into meshing engagement with the transmission gear 6 only when the cassette holder 1 is moved vertically, while being prevented from meshing with said gear 6 during the horizontal movement except for the section corresponding to the above-described angle of rotation, α-α′. In the case of such an arrangement, however, although it is not always necessary that the set torque M₂ of the spring 16 is greater than the load torque M₁ applied to the clutch disc, it is necessary for the cassette holder to be returned to its regular position at the time of completing the ejection operation and that, when the cassette is put in the cassette holder, the holder is prevented from easily moving before the cassette is completely held in the holder. Further, since it is necessary that the cassette holder holding the cassette can make the ejection operation when the magnetic recording and reproducing apparatus is operated in a tilted state on the assembly line or when being repaired or such, there is a limit to the reduction of the set torque of the spring 16.

As described above, it is common, in general, for the conventional cassette loading apparatus to be equipped with a single expensive motor and including reduction gears for attaining a suitable rotational speed of the drive arms, thus giving rise to a problem of high cost. Further, at the time of inserting the cassette, if the user continues to push in the cassette with his hand even after the drive motor starts to rotate by the action of the cassette-in switch, the worm wheel and the clutch disc are caused to rotate out of phase from each other as compared with the phases thereof prior to the insertion of the cassette, with the result that the teeth of the partially-toothless portion of the worm wheel are brought into meshing engagement with the gear of the drive arm while they are deviated in phase from the gear united with the clutch disc. Although the loading operation cannot be completed in that condition as a general rule, even if the loading operation could be completed, since the spring engaged with the clutch disc and the worm wheel is expanded, there arises a problem that the cassette might be violently ejected due to the reaction force of the spring at the time of ejection operation.

Patent Abstracts of Japan, Vol. 9, No. 2 (P-325), [1725] & Japanese Patent Specification JP-A-59151 B54 describe a cassette loading apparatus which does not employ a motor for its operation. This apparatus includes first and second springs which in concert act to enable loading/unloading of a cassette into the apparatus. The apparatus operates on a roll over type mechanism whereby, as a cassette is manually pushed into the apparatus, it causes a cassette lever to act against spring loaded levers displacing them from their original positions. Further insertion of the cassette into the apparatus causes the cassette lever to pass a point of maximum displacement of the spring loaded levers which then return to their undisplaced positions completing insertion of the cassette. It can be seen that the spring loaded levers act against initial insertion of the cassette but then act to complete its insertion into the apparatus.

Accordingly, the present invention is devised in view of the above-mentioned problems inherent to the abovementioned cassette loading apparatii for a recording and reproducing apparatus.

A first object of the present invention is to provide a cassette loading apparatus in a recording and reproducing apparatus, which has a simple arrangement so that the manhours for assembly and cost thereof are greatly reduced, and in which the above-mentioned problem due to deviation in phase of meshing engagement between the drive arm and the rack during insertion of a cassette is eliminated so as to enable a series of cassette ejection operations to be smoothly carried out and completed.

A second object of the present invention is to provide a cassette loading apparatus in a recording and reproducing apparatus which enables the travel speed of a cassette to be retarded just before a second position is reached where recording and reproduction to and from the cassette can be effected, thereby to provide smooth and soft cassette loading and unloading operation.

To this end, according to the present invention there is provided a cassette loading apparatus comprising:- a cassette holder for releasably holding a cassette, the holder having side walls with guide pins projecting therefrom; side plates disposed to the sides of the holder, each side plate having a guide groove comprising a first guide groove portion and a second guide groove portion extending from an end of said first portion substantially orthogonally thereto, wherein each guide pin projects into a respective guide groove to enable the holder to be reciprocated relative to the side plates between a first position in which a cassette can be loaded into or unloaded from the holder and a second position where recording onto or reproduction from a loaded cassette can be effected; drive means including rotatable drive arms rotatably supported by said side plates, said drive arms engaging with respective guide pins; a power output means having a toothed portion in meshing engagement with a gear of said drive means and another toothed portion for meshing engagement with a gear of a power source, whereby movement of the drive gear is communicated via the power output means and drive means to the rotatable drive arms to cause the holder to move between its first and second positions, the loading apparatus being characterised in that it includes a supplementary force imparting means provided on at least one of said side plates, the supplementary force imparting means having a resilient member which imparts a force to a drive arm which displaces it during at least a latter part of the holder's movement from its first position to its second position, said force acting against the movement of the holder to slow its movement towards its second position and the resilient member stores a rotating urging force which it imparts to the holder to supplement movement of the holder from its second position towards its first position.

The present invention will be more apparent from the description of preferred embodiments of the present invention, which are explained hereinbelow in detail with reference to the accompanying drawings.
Figure 1 is a perspective view illustrating a first embodiment of the present invention;
Figure 2 is a block diagram for explaining the operation of a drive system for the apparatus shown in Figure 1;
Figures 3 to 7 are side views illustrating essential parts of the apparatus shown in Figure 1, for explaining the operation thereof;
Figure 8 is a chart showing the relationship between the moved distance of a cassette holder shown in Figure 1 and various forces;
Figure 9 is a perspective view illustrating a second embodiment of the present invention;
Figures 10 and 11 are perspective views illustrating essential parts of the apparatus shown in Figure 9, the parts being shown in exploded form in Figure 10 but in assembled form in Figure 11;
Figures 12 to 14 are side views illustrating essential parts of the apparatus shown in Figure 9, for explaining the operation thereof;
Figure 15 is a chart showing the relationship between the moved distance of a cassette holder shown in Figure 9 and various forces;
Figure 16 is a perspective view illustrating a third embodiment of the present invention;
Figures 17 to 19 are side views illustrating essential parts of the apparatus shown in Figure 16, for explaining the operation thereof;
Figure 20 is a side view illustrating a fourth embodiment of the present invention in which only essential parts are shown for the sake or brevity;
Figure 21 is a side view illustrating essential parts of the apparatus shown in Figure 20;
Figure 22 is a perspective view illustrating the conventional cassette loading apparatus;
Figures 23 and 24 are perspective views illustrating essential parts of the conventional apparatus shown in Figure 22, the parts being shown in exploded form in Figure 23 but in assembled form in Figure 24; and
Figure 25 to 27 are side views illustrating essential parts of the conventional apparatus shown in Figure 22.

Description will be given below of a first embodiment of the present invention with reference to the drawings.

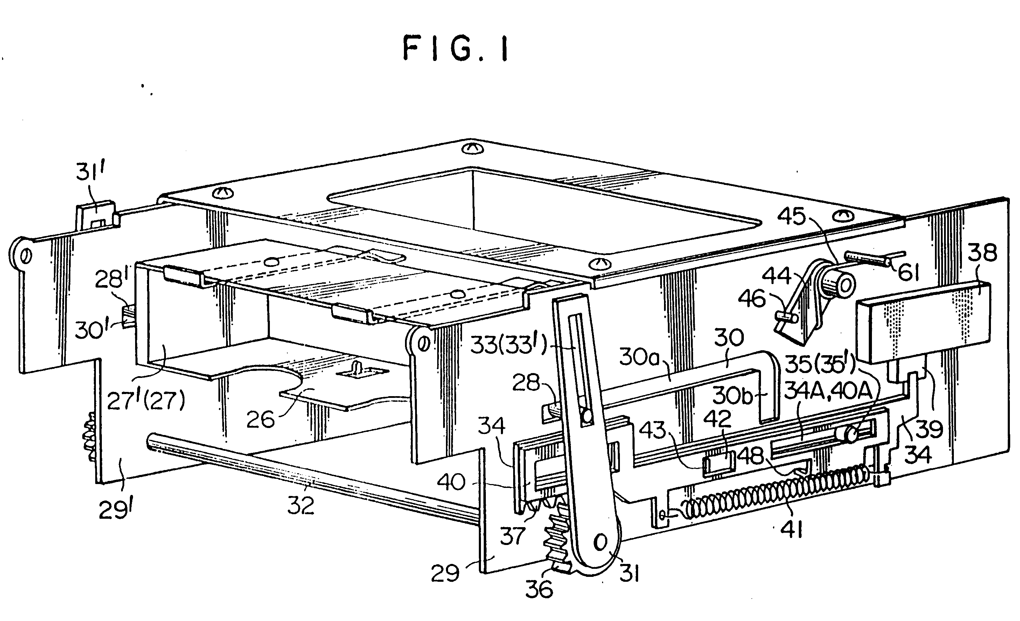

Figure 1 shows the construction of a cassette loading apparatus in accordance with a first embodiment of the present invention.

In figure 1, a reference numeral 26 denotes a cassette holder; 27 and 27′, side walls formed integrally on both sides of the cassette holder 26; 28 and 28′, guide pins provided on the side walls 27, 27′; 29 and 29′, side plates disposed on both sides of the cassette holder 2; and 30 and 30′, L-shaped guide grooves formed in the side plates 29, 29′ and engaged with the guide pins 28, 28′, respectively, the L-shaped guide grooves each consisting of two or three grooves. It is noted that the guide pins 28, 28′ are provided in correspondence with the number of the guide grooves 30, 30′. Reference numerals 31, and 31′ denote drive arms connected to each other by means of a shaft 32 which is rotatably supported by the side plates 29, 29′, guide grooves 33, 33 ′ formed in the forward ends thereof being respectively engaged with the main guide pins 28, 28′ provided on the side wall members 27, 27′ of the cassette holder 26 described above. One of the drive arms 31, 31′ is provided integrally thereon with a gear which is coaxial with the shaft 32. A reference numeral 34 denotes a first rack which is provided with a guide groove 34A such as to be horizontally movable owing to the engagement between the guide groove 34A and one of two guide pieces 35, 35′ provided on the side plates 29, 29′. The first rack 34 has a toothed portion 37 having several teeth formed in one end thereof for meshing engagement with the gear 36 provided integrally on the drive arm 31 and a bent projection formed at the other end thereof for engagement with an actuator 39 of a slide switch 38 secured to the side plate 29 or 29′. A reference numeral 40 denotes a second rack which is provided with a guide groove 40A, similarly to the first rack 34, such as to be horizontally movable owing to the engagement between the guide groove 40A and one of the guide pieces 35, 35′ provided on the side plates 29, 29′. The first and second racks 34, 40 are connected to each other by means of a first resilient member 41, such as a tension spring, engaged with respective spring engaging portions of these racks. It is noted that the second rack 40 is provided with an engaging portion 42 in the shape of an elongated rectangular hole, and a projection 43, such as a bent portion, provided on the first rack 43 is fitted in the engaging portion 42 so that the phase of the guide grooves 34A, 40A both engaged with the guide piece 35 provide on the side plate 29 or 29′ are normally coincident with each other in a position where the projection 43 and the engaging portion 42 are brought into contact with each other by means of the tension spring 41 and, moreover, the first and second racks 34, 40 are allowed to slidably move relative to each other by a distance corresponding to a range of movement defined by the rectangular engaging portion 42 of the second rack 40 and the projection 43 of the first rack 34.

Reference numerals 44 and 44′ denote control levers which are rotatably provided on the side plates 29, 29′ and are coaxially provided thereon with second resilient members 45, 45′, such as springs. Reference numerals 46, 46′ denote lever stops for the control levers 44, 44′, which project from the side plates 29, 29′. Each of the second resilient members 45, 45′ is engaged at one end thereof with a stop 61, 61′ projecting from the side plates 29, 29′ and at the other end thereof with the control lever 44, 44′. Each of the control levers 44, 44′ is normally imparted with a rotation urging force in a direction toward the lever stop 46, 46′ by means of the second resilient member 45, 45′. The control levers 44, 44′ and the second resilient member 45, 45′ in combination constitute a supplementary force imparting means.

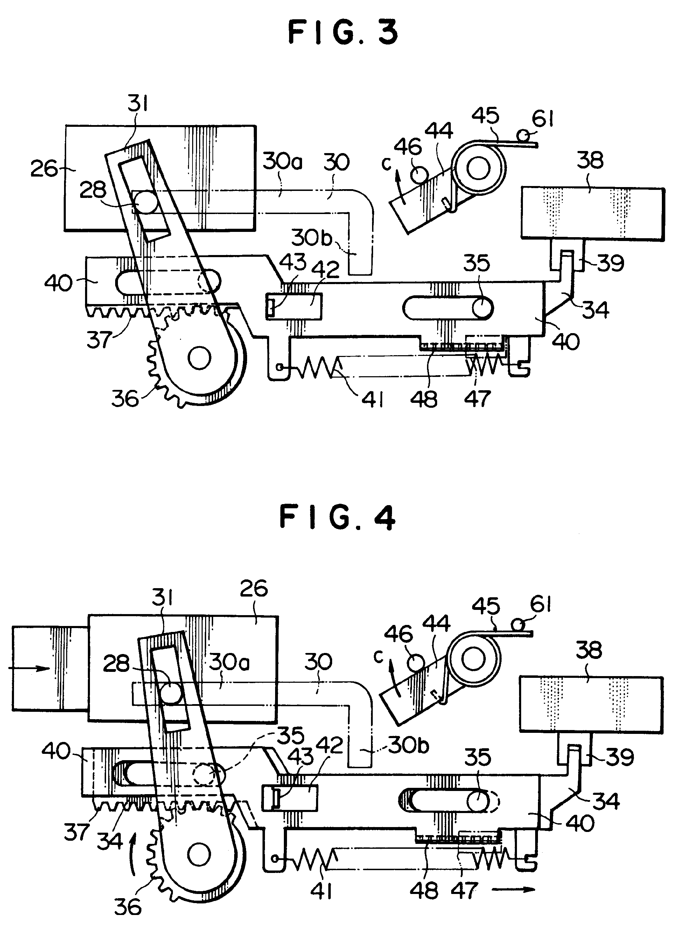

A reference numeral 47 (see Figure 3) denotes an output gear which is provided on a main body of the magnetic recording and reproducing apparatus so as to be brought into meshing engagement with a toothed portion 48 formed at an L-shaped end of the second rack 40 when the cassette loading apparatus according to the present invention is mounted on the main body, with their phases being aligned with each other beforehand. It should be noted that the toothed portion 48 of the second rack 40 is formed to extend over the same length as the range of the toothed section formed in the first rack 34 and in a position where it is prevented from meshing with the gear 36 provided on the drive arm 31.

With the construction described above, the sequence of power transmission from the input to the output of power will be explained.

First, the output gear 47 is rotated to conduct power input and is brought into meshing engagement with the toothed portion 48 formed on the second rack 40 so as to move the second rack 40. The movement of the second rack 40 causes the projection 43 engaged with the engaging portion 42 to move the first rack 34, thus conducting power output. The movement of the first rack 34 causes the drive arm 31 in meshing engagement with the first rack 34 to rotate so that the cassette holder 26 engaged with the drive arm 31 through the intermediary of the guide pin 28 moves horizontally and vertically.

Generally, in a magnetic recording and reproducing apparatus, various driving sources are required for driving a capstan, a tape loading mechanism, reel bases and the like. However, from the viewpoint of efficient performance, cost and the like, various constructions have been put into practice such as one in which separate motors are used as the respective driving sources or a multi-functional single motor is used. Generally, in the case of a multi-functional single motor, it is necessary to change the magnitude and direction of the output of the drive motor with regard to the respective functions by making use of various clutch mechanisms in which mechanical means, electric solenoids and other means are used in combination.

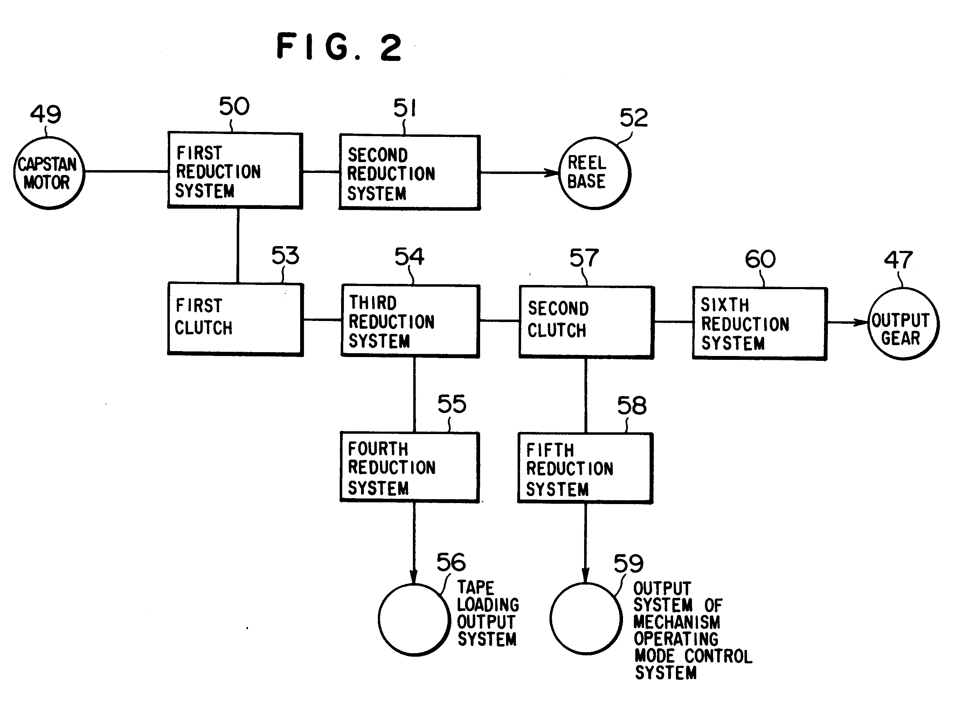

Figure 2 is a block diagram showing an example of the drive system for the magnetic recording and reproducing apparatus according to the present embodiment. In the case of the present embodiment, operation of the whole apparatus except a cylinder is performed by a capstan motor alone. In Figure 2, a reference numeral 49 denotes a direct-drive capstan motor; 50, a first reduction gear system; 51, a second reduction gear system; 52, a reel base; 53, a first clutch; 54, a third reduction gear system having a type of clutch function; 55, a fourth reduction gear system; 56, an output system serving to perform the tape loading operation; 57, a second clutch; 58, a fifth reduction gear system; 59, an output system for a system serving to control the operation mode of the respective mechanism; 60, a sixth reduction gear system; and 47, the output gear connected to the cassette loading apparatus according to the present invention. It is noted that the first clutch 52 serves to change over the mode between cassette loading, tape loading the like operations and tape travelling operation modes, and that, although not shown in the block diagram of Figure 2, there is provided between the first and second reduction gear systems 50, 51 a mechanism which serves to selectively transmit or cut off rotation of the capstan motor in linked relation to the mechanism operation mode control system so that the rotation of the capstan motor is transmitted in the tape travelling operation modes.

Incidentally, although various other arrangements are applicable to the drive system described above, since the object of the present invention is not to improve the drive system itself but to use the driving source of the magnetic recording and reproducing apparatus without employing any drive motor exclusively for the cassette loading apparatus, detailed description of the drive system will be omitted.

Figures 3 to 7 are side views of essential parts of the cassette loading apparatus constructed as described above, for explaining the operation thereof.

Figure 3 shows a state prior to the insertion of a cassette, and Figure 4 shows a state where the cassette holder holding a cassette is pushed in so that the cassette-in switch is about to be turned on to cause the drive motor to start rotation.

More specifically, the second rack 40 in meshing engagement with the output gear 47 is in its original position, while the first rack 34 having the toothed portion 37 which is in meshing engagement with the gear 36 provided integrally on the drive arm 31 is caused to move horizontally against the first resilient member 41.

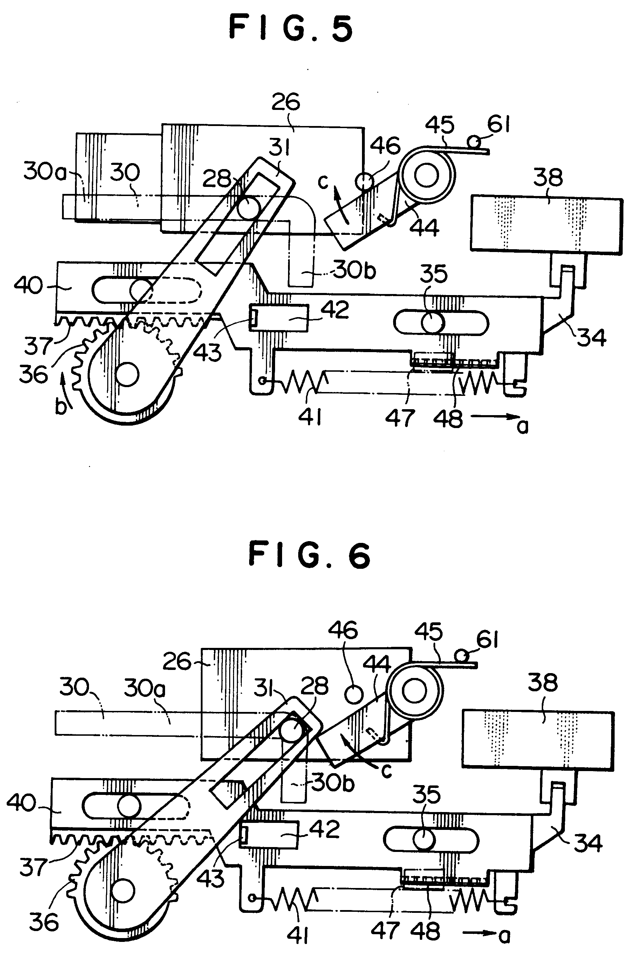

Figure 5 shows a state where the cassette-in switch is turned on to allow the cassette loading operation to be performed. The output gear 47 is rotated to cause the second rack 40 to move horizontally in the direction of an arrow a while pushing the projection 43 of the first rack 43 by the engaging portion 42, so that the drive arm 31 is caused to rotate in the direction of an arrow b, with the result that the cassette holder 26 engaged with the drive arms 31, 31′ through the intermediary of the guide pins 28, 28′ is allowed to move horizontally and vertically along the L-shaped guide grooves 30, 30′ provided in the side plates 29, 29′.

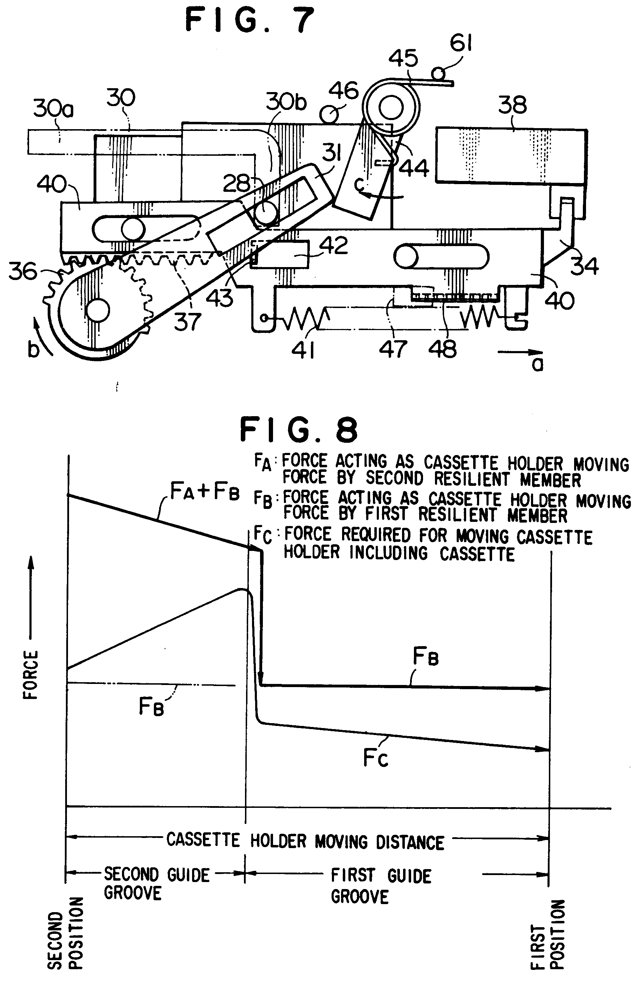

Figure 6 shows a state where the guide pin 28 projected from the side wall 27 of the cassette holder 26 is about to be shifted from a first guide groove portion 30a into a second guide groove portion 30b formed in the side plate 29. In this case, the drive arm 31 has already come into slight contact with the control lever 44 so as to make the latter rotate. As the drive arm 31 causes the guide pin 28 to move further in a direction toward the second guide groove portion 30b (that is, toward a second position where recording and reproducing to and from the cassette can be effected), the control lever 44 is further rotated in contact with the drive arm 31. This continues until the second position is reached where the cassette is loaded as shown in Figure 7. In this case, since the control lever 44 has imparted to it by the second resilient member 45 a rotation urging force in the direction of an arrow c opposite to the direction of rotation of the drive arm 31, the speed of the cassette holder 26 is reduced before arrival at the second position.

Usually, when the guide pin 28, 28′ of the cassette holder 26 is shifted from the first guide groove portion 30a to the second guide groove portion 30b, the weight of the cassette holder 26 containing the cassette, which has no effect during the movement along the first guide groove portion 30a, is added in the direction toward the second position, with the result that, owing to the backlash of the gears of the driving means constituted by the drive arm 31, 31′ and the like, the cassette holder 26 is moved (or rather dropped) abruptly toward the second position, thus making a loud noise. however, according to the present embodiment, since the control lever 44, 44′ is imparted by the second resilient member 45, 45′ with a rotation urging force in a direction opposite to the direction of rotation of the drive arm 31, 31′ (as indicated by arrow c), the speed of the cassette holder 26 is reduced before arrival at the second position, thus preventing the abrupt drop and, accordingly, reducing the noise level remarkably.

Next, description will be given of the ejection operation.

As the drive motor starts to rotate in the state shown in Figure 7, the output gear 47 is caused to rotate so that the second rack 40 is moved horizontally in a direction opposite to the direction of arrow a. The movement of the second rack 40 is transmitted to the first rack 34 through the tension spring 41 so that the first rack 34 is caused to move horizontally in the same direction as the second rack 40.

The drive arm 31 is caused to rotate in a direction opposite to the direction of arrow b, so that the cassette holder 26 is moved vertically and then horizontally along the L-shaped guide grooves 30, 30′ formed in the side plates 29, 29′ until it arrives at the position shown in Figure 3 where the cassette is ejected. The rotation urging force produced by the second resilient member 45 constituting the supplementary force imparting means is exerted on the drive arm 31 through the control lever 44 in the direction of arrow c so as to make the drive arm 31 rotate in a direction opposite to the direction of arrow b, as is already apparent from the description of the supplementary force imparting means in the case of inserting a cassette. Therefore, the force which acts to move the cassette holder 26 in the direction toward the first position is a resultant force of the resilient forces of the first and second resilient members 41, 45.

The capstan motor 49 as the drive motor has sufficient power to make the cassette holder 26 containing a cassette reciprocate between the first position where the cassette tape can be loaded into and unloaded from the cassette holder and the second position where recording and reproduction to and from the cassette tape can be effected. However, when the cassette holder 26 is moved from the second position to the first position, the first resilient member 41 plays the role of the clutch mechanism so as to prevent the cassette holder 26 from being transmitted with an unnecessary excess of force. Consequently, in the case where the cassette holder 26 is ejected by the action of the resilient force of the first resilient member 41 alone, the resilient force must have a very large value due to the considerable leverage between the gear portion 36 of the drive arm 31 and the guide pin 28 of the cassette holder 26, with the result that, on the occasion of loading a cassette, the cassette holder 26 would have to be inserted horizontally with a large force acting against the first resilient member 41, which is not practicable. In other words, the smaller the resilient force of the first resilient member 41 is, the more easily and practicably the apparatus can be used.

However, if the resilient force is too small, the first resilient member 41 is incapable of generating sufficient force to move the cassette holder 26, but instead stretches. Therefore, only the second rack 40 is moved in a direction opposite to the direction of arrow a without causing the first rack 34 to move, thus not moving the cassette holder 26.

In the present embodiment, the resilient force of the first resilient member 41 is weakened to such an extent so as not to hinder insertion of a cassette in the holder 26, so that it is possible to move the cassette holder 26 from the second position to the first position by supplementing the resilient force of the second resilient member 45 with that of the first resilient member 41. Namely, as apparent from the relationship between the moved distance of the cassette holder and forces shown in Figure 8, assuming that a force exerted on the cassette holder 26 by the second resilient member 45 is F_{A}, a force exerted by the first resilient member 41 on the cassette holder 26 is F_{B}, and a load generated when the cassette holder 26 containing the cassette is moved from the second position toward the first position (or the force required for this movement) is F_{C}, the resilient forces of the first and second resilient members are determined such that the forces F_{A}, F_{B} and F_{C} satisfy an inequality of F_{C} < F_{A} + F_{B} during the movement of the cassette holder. It is therefore possible to move the cassette holder 26 irrespective of its position.

In the present embodiment, the section through which the force F_{A} generated by the second resilient member is exerted is set to extend to the vicinity of the intermediate point between the first and second guide groove portions, but however, it is not limited to this and may be set to extend to any desired point. For example, it may be set to extend continuously to the first position so that the force F_{A} is exerted throughout the whole section.

Figures 6 and 7 also show the states where, on the occasion of inserting a cassette, even if the cassette-in switch is actuated to commence the cassette loading operation, the user continues to further push in the cassette with his hand.

Referring to Figure 6, the first and second racks 34, 40 are caused to move in deviation from each other, but the second rack 40 is not provided with a gear for meshing with the gear 36 provided on the drive arm 31. Accordingly, there is no possibility of deviation in phase between the gear portion of the second rack 40 and the gear 36 and the horizontal movement changes to vertical movement and, at the time when the cassette loading operation is completed, the first and second racks 34, 40 are finally returned to the state in which their phases are made coincident with each other as in the state prior to the insertion of the cassette, as shown in Figure 7, since they are connected to each other by means of the first resilient member 41.

Description will be given of the power transmission path basically making reference to the shaft 32 which connects the drive arms 31, 31′ to each other. In view of the fact that the power of the output gear 47 is transmitted to the gear 36 provided on the drive arm 31 via the second rack 40 and then the first rack 34, it will be understood that the drive arm 31 is disposed on the driving side while the other drive arm 31′, to which power is transmitted through shaft 32, is disposed on the driven side.

If the supplementary force imparting means is provided on the side of the drive arm 31′, that is, on the driven side, a reaction force against the rotation urging force exerted by the supplementary force imparting means in the direction of the arrow c is applied to the shaft 32 through the drive arm 31′ before and after arrival at the second position where the cassette is loaded, thereby increasing the torsional moment which the shaft 32 experiences.

It is therefore necessary to enhance the rigidity of the shaft 32 such as by increasing the diameter thereof.

In view of the above, provision of the supplementary force imparting means merely on the side of the drive arm 31, that is, on the driving side, causes no change in the torsional moment of the shaft 32 so that it is possible to use the shaft having the same rigidity as conventional shafts. Further, in the case where there is some tolerance in the rigidity of the shaft, it is of course possible for the rotation urging force of the supplementary force imparting means on the driving side to be larger than that on the driven side.

Now, description will be given of a second embodiment of the present invention with reference to the drawings.

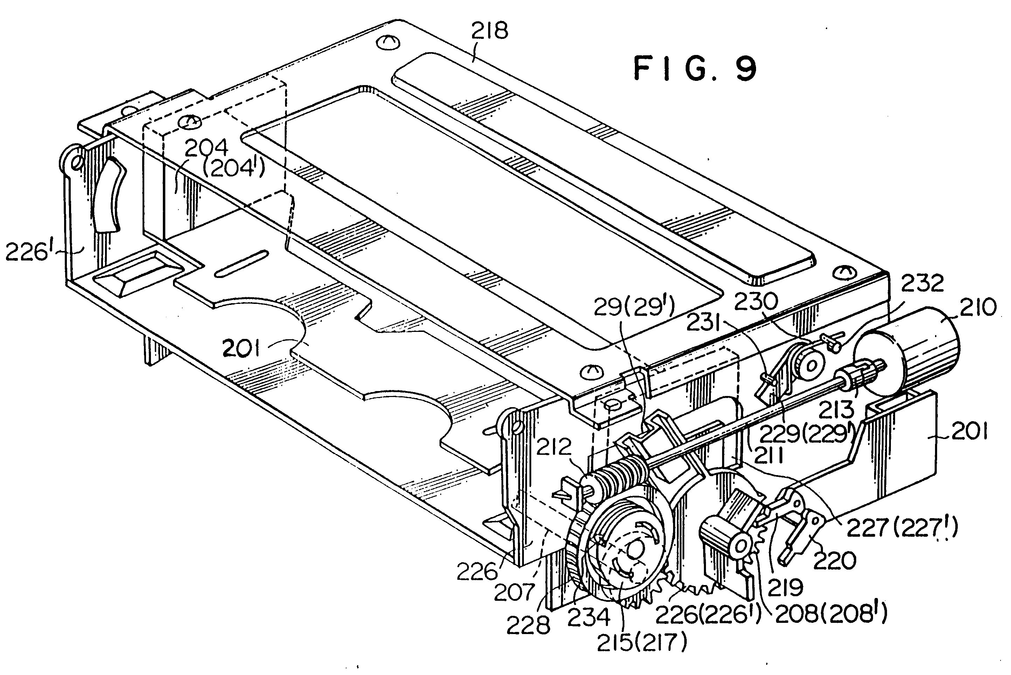

Figure 9 shows the construction of a cassette loading apparatus in accordance with the second embodiment of the present invention.

In Figure 9, a reference numeral 201 denotes a cassette holder for holding a cassette; 226 and 226′, side plates disposed on both sides of the cassette holder 201; and 227 and 227′, L-shaped guide grooves respectively formed in the side plates 226, 226′, each usually consisting of two or three grooves. Reference numerals 204 and 204′ denote side wall members provided integrally on both sides of the cassette holder 201. Guide pins 205, 205′ engaged with the guide grooves 227, 227′ formed in the side plates 226, 226′ are respectively provided on the side wall members 204, 204′, corresponding to the number of the guide grooves. Reference numerals 206 and 206′ denote transmission gears which are connected to each other by a shaft 207 which is rotatably supported by the side plates 226, 226′, and numerals 208 and 208′ denote rotatable drive arms each having a transmission gear 206, 206′ associated therewith, the drive arms 208, 208′ being respectively provided thereon with gears for meshing engagement with the transmission gears 206, 206′ and are pivotally supported by the side plates 226, 226′, respectively. Guide grooves 209, 209′ formed in the forward ends of the drive arms 208, 208′ are adapted to engage with the main guide pins 205, 205′ provided on the side wall members 204, 204′ of the cassette holder 201. A reference numeral 210 denotes a drive motor secured to the side plate 226, and a numeral 211 denotes a shaft which has a worm 212 and is connected to an output shaft of the drive motor 210 through a coupling 213 while being rotatably supported by the side plate 226. A reference numeral 228 denotes a power input member (hereinafter, referred to as a worm wheel) which is in meshing engagement with the worm 212, and a numeral 215 denotes a clutch disc which is connected to the worm wheel 228 by means of a first resilient member 234 such as a coiled torsion spring so as to be rotatable relative to each other while being rotatably supported by a shaft depending from the side plate 226. The worm wheel 228 is rotatably mounted on the shaft sleeve portion of the clutch disc 215 and, further, a pinion 217 is press-fitted to the shaft sleeve portion of the clutch disc 215 so as to be united therewith while holding the worm wheel 228 therebetween. Further the pinion 217 is in meshing engagement with the transmission gear 206.

The pinion 217 and the clutch disc 215 in combination constitute a power output member, while a clutch means is constituted by the power output member and the power input member which includes the worm wheel 228 and the resilient member 234.

Reference numerals 229 and 229′ denote control levers which are rotatably provided on the side plates 226, 226′ and are coaxially provided thereon with second resilient members 230, 230′ such as springs. Reference numerals 231 and 231′ denote lever stops for the control levers 229, 229′, which project from the side plates 226, 226′. Each of the second resilient members 230, 230′ is engaged at one end thereof with a stop 232, 232′ projecting from the side plate 226, 226′ and at the other end thereof with the control lever 229, 229. Each of the control levers 229, 229′ is normally imparted with a rotation urging force in a direction toward the lever stop 231, 231′ by means of the second resilient member 230, 230′. The control levers 229, 229′ and the second resilient members 230, 230′ in combination constitute a supplementary force imparting means.

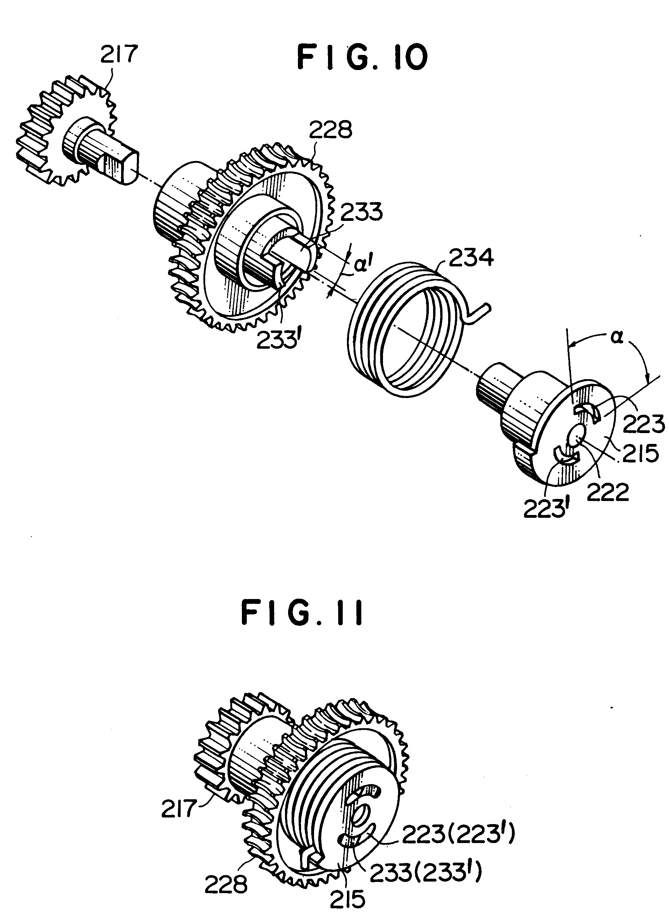

Figures 10 and 11 are detailed drawings of the clutch means. More specifically, the clutch disc 215 has formed therein first engaging portions (hereinafter, referred to as elongated holes) 223, 223′ of crescent form such that they each extend over a predetermined angle and are oppositely arranged on a circle concentric with an axial hole 222, and second engaging portions (hereinafter, referred to as projections) 233, 233′ formed integrally with the worm wheel 228 such that they are opposite to each other about the centre of the wheel 228, the elongated holes 223, 223′ being respectively engaged with the projections 233, 233′. Meanwhile, one end of the first resilient member 234 is engaged with the worm wheel 228 and its other end with the clutch disc 215 so as to establish a positional relationship between the elongated holes 223, 223′ and the projections 233, 233′ as indicated by solid lines. Accordingly, the worm wheel 228 and the clutch disc 215 are allowed to rotate with respect to each other against the first resilient member 234 by an amount corresponding to the difference between the opening angle α′ of an elongated hole 223, 223′ and the angular width α′ of a projection 233, 233′ that is, α-α′. The construction such as shown in Figure 10 takes aims to provide an improved operation and user sensitively.

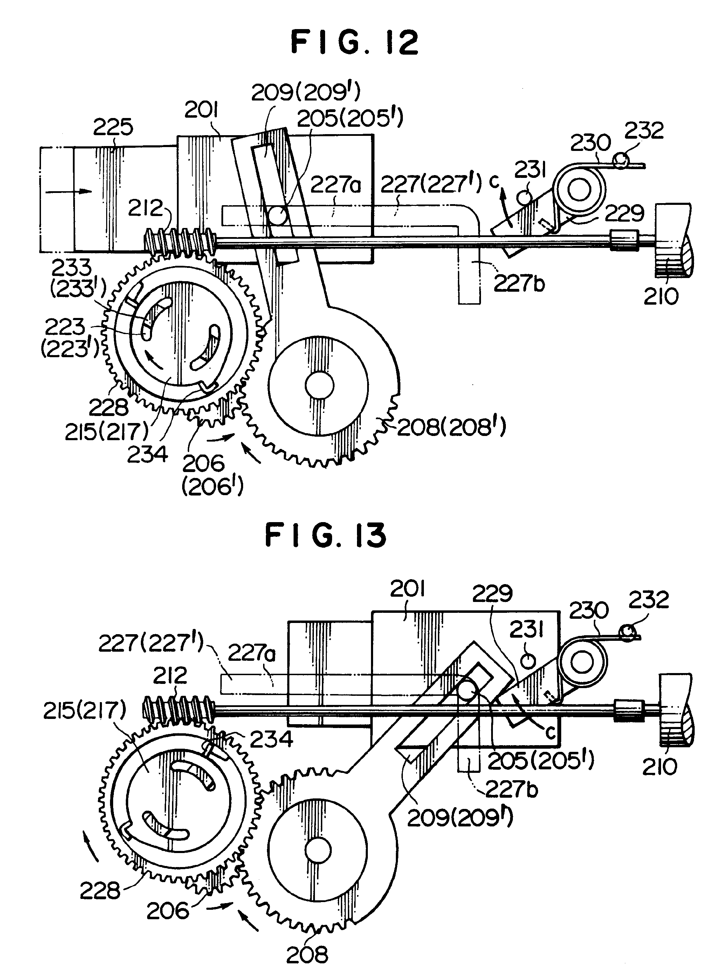

Figures 12 to 14 are views for explaining of the operation of the present embodiment of the invention described above. Referring to Figure 12, the apparatus is designed such that, before the motor 210 starts to rotate due to actuation of a switch upon the insertion of a cassette 225, or when the cassette 225 is inserted when the power switch is turned off, only the transmission gear 206 in meshing engagement with the drive arm 208 are allowed to rotate relative to the worm wheel 228 in its located state within the range α-α′ mentioned above. For this reason, in the case where the power switch is turned on, as the cassette holder 201 holding the cassette 225 is slightly pushed against the first resilient member 234, the switch circuit is operated to cause the drive motor 210 to start rotating and, accordingly, the worm wheel 228 is made to rotate through the worm 212, so that the projections 233, 233′ of the worm wheel 228 are caused to push the end surfaces of the elongated holes 223, 223′ of the clutch disc 215. Consequently, the drive arms 208, 208′ are rotated through the intermediary of the transmission gears 206, 206′ in meshing engagement with the pinion 217 provided integrally on the clutch disc 215 constituting the power output member, so that the cassette holder 201, which is provided with guide pins 205, 205′ respectively engaged with the guide grooves 209, 209′ formed in the drive arms 208, 208′ is caused to move horizontally and then vertically along the L-shaped guide grooves 227, 227′ formed in the side plates 226, 226′, thus completing the cassette loading operation.

On the other hand, in the case where the power switch is turned off, it is possible by inserting a cassette to push the cassette holder 201 against the first resilient member 234 by a distance corresponding to the angle of rotation, α-α′, mentioned above. Further pushing beyond that distance results in generation of a strong reaction force since the worm wheel 228 is in its locked state. Therefore, if the user removes his hand, the cassette holder 201 is returned to its original position by the reaction force of the first resilient member 234.

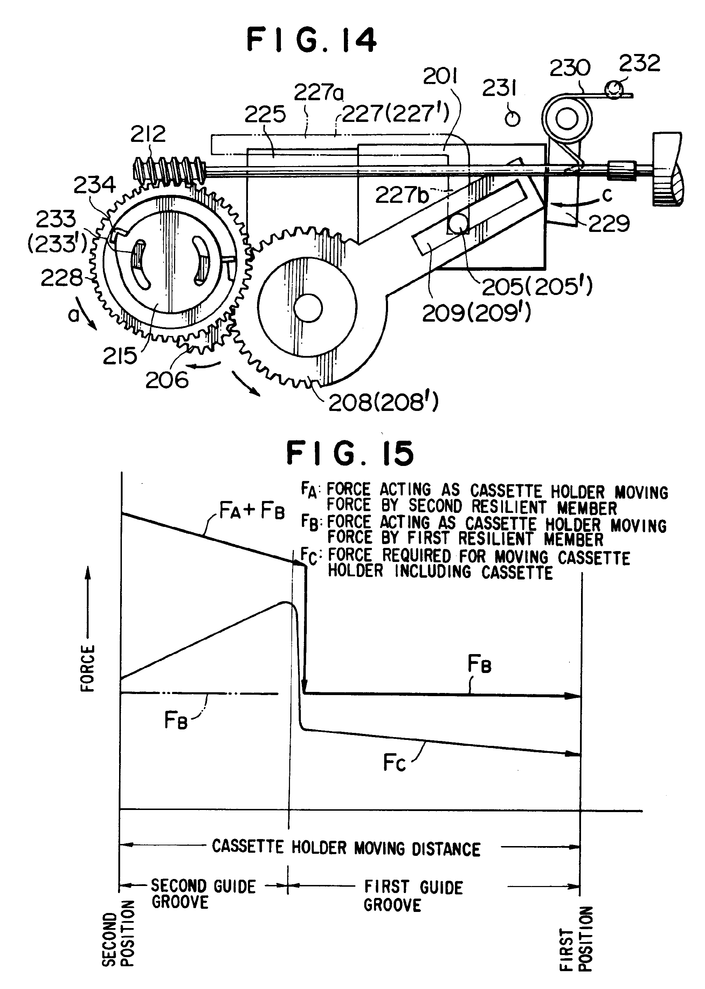

Figure 13 shows a state where the guide pin 205 projected from the side wall member 204 of the cassette holder 201 is about to be shifted from a first guide groove portion 227a into a second guide groove portion 227b formed in the side plate 226. In this case, the drive arm 208 has already come into slight contact with the control lever 229. As the guide pin 205 is further moved in the direction toward the second guide groove portion 227b (that is, toward a second position where recording and reproduction to and from the cassette can be effected), the drive arm 208 causes the control lever 229 to rotate in contact therewith, which continues until the second position is reached where the cassette is loaded as shown in Figure 14. In this case, since the control lever 229 has imparted to it by the second resilient member 230 a rotation urging force in the direction of an arrow c opposite to the direction of rotation of the drive arm 208, the speed of the cassette holder 201 is reduced before arrival at the second position.

Usually, when the guide pin 205, 205′ of the cassette holder 201 is shifted from the first guide groove portion 227a to the second guide groove portion 227b, the weight of the cassette holder 201 containing the cassette, which has no effect during the movement along the first guide groove portion 227a, is added in the direction toward the second position of the cassette, with the result that, owing to the backlash of the gears of the driving means constituted by the drive arm 208, 208′ and the like, the cassette holder 201 is moved (or rather dropped) abruptly toward the second position of the cassette, thus making a loud noise. However, according to the present embodiment, since the control lever 229, 229′ is imparted by the second resilient member 230, 230′ with the rotation urging force in the direction opposite to the direction of rotation of the drive arm 208, 208′ (as indicated by arrow c), the speed of the cassette holder 201 is reduced before arrival at the second position, thus preventing the abrupt drop and, accordingly, reducing the noise level remarkably.

Next, description will be given of the ejection operation.

As the drive motor 210 starts to rotate in the state shown in Figure 14, the worm wheel 228 as the power input member is caused to rotate in the direction of arrow a. The turning force of the worm wheel 228 is transmitted through the first resilient member 234 to the clutch disc 215 and the pinion 217 which in combination constitute the power output member so as to make them rotate in the same direction as the worm wheel 228.

The drive arm 208 is caused to rotate in the same direction as indicated by arrow a, so that the cassette holder 201 is moved vertically and then horizontally along the L-shaped guide grooves 227, 227′ formed in the side plates 226, 226′ until it arrives at the position shown in Figure 12 and, further, at the first position of the cassette holder 201. The rotation urging force produced by the second resilient member 230 constituting the supplementary force imparting means is exerted on the drive arm 208 through the control lever 229 in the direction of arrow c so as to make the drive arm 208 rotate in the same direction as indicated by arrow a, as is already apparent from the description of the supplementary force imparting means in the case of inserting a cassette. Therefore, the force which acts to move the cassette holder 201 in the direction toward the first position is a resultant force of the resilient forces of the first and second resilient members 234, 230.

The drive motor 210 has sufficient power to make the cassette holder 201 containing a cassette reciprocate between the first position where the cassette tape can be loaded into and unloaded from the cassette holder and the second position where recording and reproduction to and from the cassette tape can be effected. However, when the cassette holder 201 is moved from the second position to the first position, the first resilient member 234 plays the role of the clutch mechanism so as to prevent the cassette holder 201 from being transmitted with an unnecessary excess of force. Consequently, if the cassette holder 201 is ejected by the action of the resilient force of the first resilient member 234 alone, the resilient force must have a very large value due to the considerable leverage between the gear portion of the drive arm 208 and the guide pin 205 of the cassette holder 201, with the result that, on the occasion of loading a cassette, the cassette holder 201 would have to be inserted horizontally with a large force acting against the first resilient member 234, which is not practicable. In other words, the smaller the resilient force of the first resilient member 234, the more easily and practicably the apparatus can be used.

However, if the resilient force is too small, the first resilient member 234 is incapable of generating sufficient force to move the cassette holder 201, but instead stretches. Therefore, only the worm wheel 228 is moved in the direction of arrow a without causing the power output member to move, so that power is not transmitted to the drive arm 208 thus not moving the cassette holder 201.

In the present embodiment, the resilient force of the first resilient member 234 is weakened to such an extent so as not to hinder the insertion of a cassette in the holder 201, so that it is possible to move the cassette holder 201 from the second position to the first position by supplementing the resilient force of the second resilient member 230 with that of the first resilient member 234. Namely, as apparent from the relationship between the moved distance of the cassette holder and forces shown in Figure 15, assuming that a force exerted on the cassette holder 201 by the second resilient member is F_{A}, a force exerted by the first resilient member 234 on the cassette holder 201 is F_{B}, and a load generated when the cassette holder 201 containing the cassette is moved from the second position toward the first position (or the force required for this movement) is F_{C}, the resilient forces of the first and second resilient members are determined such that the forces F_{A}, F_{B} and F_{C} satisfy an inequality of F_{C} < F_{A} + F_{B} during the movement of the cassette holder. It is therefore possible to move the cassette holder 201 irrespective of its position.

In the present embodiment, the section through which the force F_{A} generated by the second resilient member is exerted is set to extend to the vicinity of the intermediate point between the first and second guide groove portions, but however, it is not limited to this and may be set to extend to any desired point. For example, it may be set to extend continuously to the first position so that the force F_{A} is exerted throughout the whole section.

Figures 13 and 14 also show the state where, on the occasion of inserting a cassette, even if the cassette-in switch is actuated to commence the cassette loading operation, the user continues to further push in the cassette with his hand.

Referring to Figure 13, the worm wheel 228 and the pinion 217 constituting a part of the power output member are caused to move in deviation from each other, but the worm wheel 228 is not provided with a gear for meshing with the transmission gear 206 which is kept in meshing engagement with the gear provided on the drive arm 208. Accordingly, there is no possibility of deviation in phase between the gear portions of the worm wheel 228 and the power output member and horizontal movement changes to vertical movement and, at the time when the cassette loading operation is completed, the power output member and the power input member are finally returned to the state in which their phases are made coincident with each other as in the state prior to the insertion of the cassette, as shown in Figure 14, since they are connected to each other by means of the first resilient member 234.

Now, description will be given of a third embodiment of the present invention with reference to the drawings.

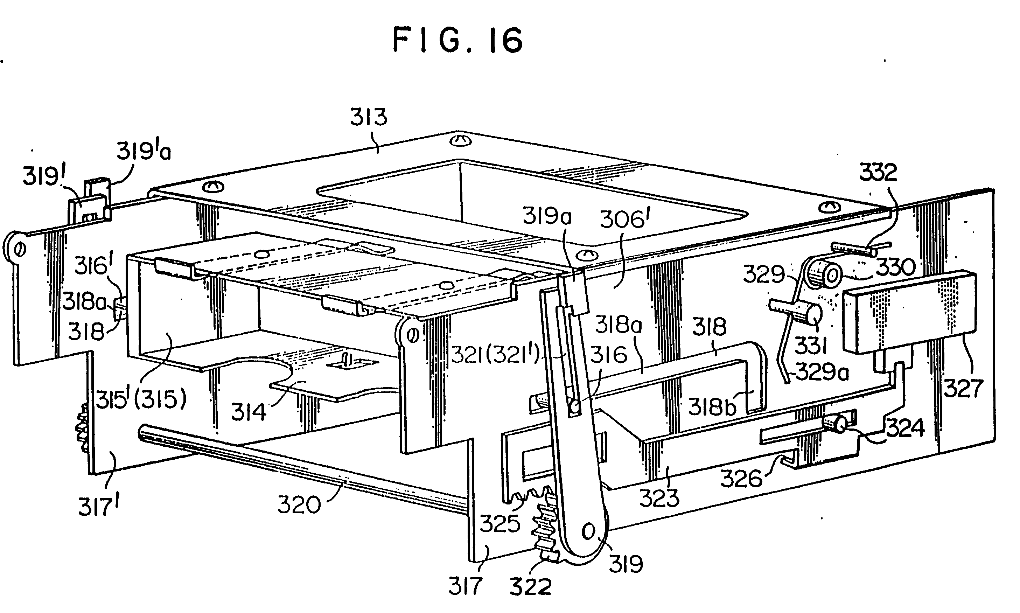

Figure 16 shows the construction of a cassette loading apparatus in accordance with the third embodiment of the present invention. In Figure 16, a reference numeral 314 denotes a cassette holder; 315 and 315′, side walls formed integrally on both sides of the cassette holder 314; 316 and 316′, guide pins projectingly provided on the side walls 315, 315′; 317 and 317′, side plates disposed on both sides of the cassette holder 314; and 318, 318′, guide grooves formed in the side plates 317, 317′ and respectively engaged with the guide pins 316, 316′, each guide groove having a first guide groove portion 318a and a second guide groove portion 318b extending continuously from one end of the first guide groove portion orthogonally or substantially orthogonally thereto and consisting of two or three grooves. It is noted that the guide pins 316, 316′ are provide in correspondence to the number of the guide grooves 318, 318′. Reference numerals 319, 319′ denote drive arms connected to each other by means of a shaft 320 which is rotatably supported by the side plates 317, 317′, guide grooves 321, 321′ formed in the forward ends thereof being respectively engaged with the main guide pins 316, 316′ provided on the side walls 315, 315′ of the cassette holder 314. One of the drive arms 319 or 319′ is provided integrally thereon with a gear 322 which is coaxial with the shaft 320. A reference numeral 323 denotes a rack which is provided with a rack guide groove so as to be horizontally movable through the engagement between the rack guide groove and one of two guide pieces 324, 324′ provided on the side plates 317, 317′. The rack 323 has a toothed portion 325 having several teeth formed at one end thereof for meshing engagement with the gear 322 and another toothed portion 326 having the same number of teeth as the toothed portion 325 formed at the L-shaped other end thereof in a position where it is prevented from meshing with the gear 322 provided on the drive arm 319 or 319′.

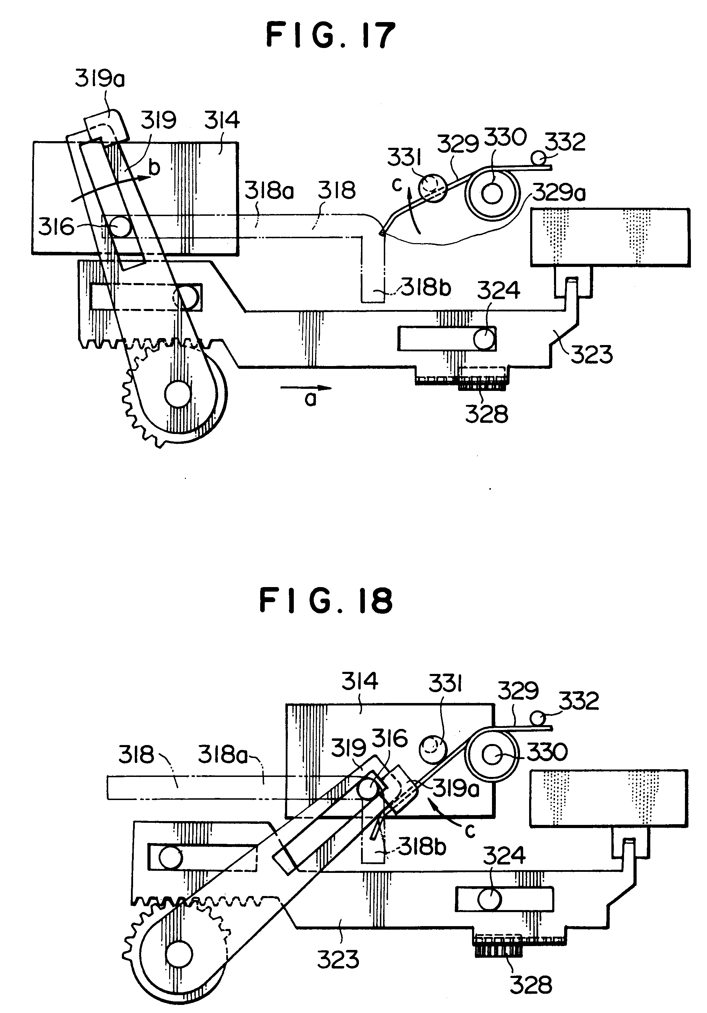

A reference numeral 327 denotes a switch element which is linked to the rack 323 and serves to detect the start and finish of movement of the rack 323. The main body of the switch is secured to the side plate 317 or 317′. A reference numeral 328 (see Figure 17) denotes an output gear which is provided on a main body of the magnetic recording and reproducing apparatus so as to be brought into meshing engagement with the toothed portion 326 formed on the rack 323 when the cassette loading apparatus according to the present invention is mounted on the main body of the magnetic recording and reproducing apparatus, with their phases being aligned with each other beforehand. The drive arms 319, 319′, the shaft 320, the rack 323, the switch element 327 and the holder driving gear 328 in combination constitute a cassette holder driving means.

Reference numerals 329, 329′ denote resilient members mounted on shaft portions 330, 330′ which are projected from the side plates 317, 317′. Reference numerals 331 and 331′ denote first stops for one end of the resilient members 329, 329′, which stops are provided on the side plate 317, 317′. The other ends of the resilient members 329, 329′ are engaged with second stops which project from the side plates 317, 317′. The resilient members 329, 329′ are normally imparted with a rotation urging force in a direction toward the first stops 331, 331′.

Reference numerals 329a and 329a′ denote bent portions extending from the resilient members 329, 329′ so as to prevent the end surfaces of the resilient members 329, 329′ form coming into contact with the drive arm 319.

Reference numerals 319a and 319a′ denote guide members provided integrally on the drive arms 319, 319′.

Figures 17 to 19 are side views of essential parts of the cassette loading apparatus constructed as described above, for explaining the operation thereof. As the holder driving gear 328 is rotated to cause the rack 323 to move in the direction of arrow a, the drive arm 319 is rotated in the direction of arrow b.

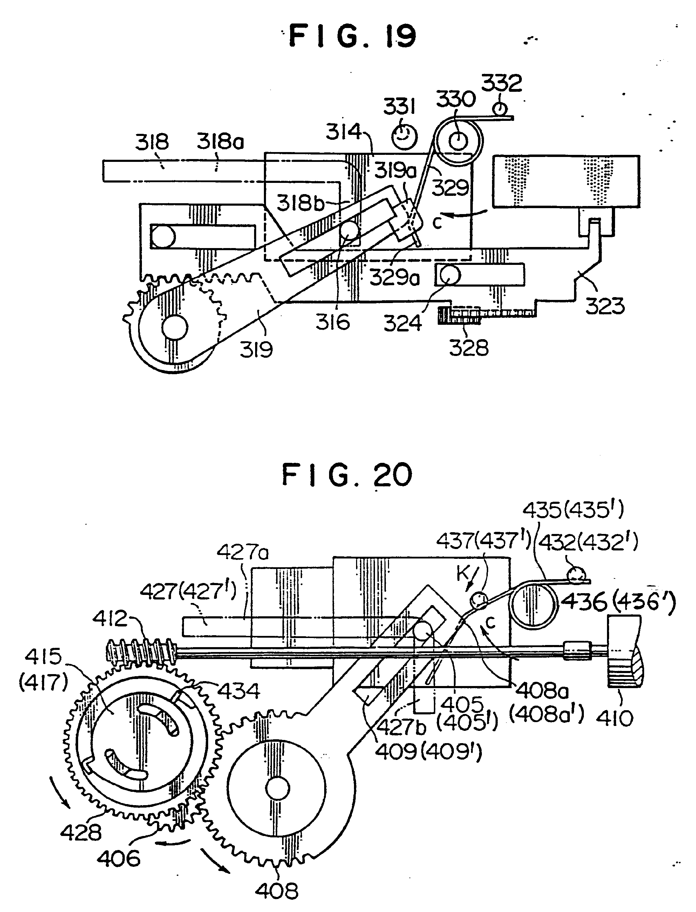

Figure 18 shows a state where the guide pin 316 projected from the side wall 315 of the cassette holder 314 is about to be shifted from the first guide groove portion 318a into the second guide groove portion 318b formed in the side plate 317. In this case, the drive arm 319 is about to come in contact with the resilient member 329. As the guide pin 319 is moved further in a direction toward the second guide groove portion 318b (that is, toward the second position where recording and reproduction to and from the cassette can be effected), the drive arm 319 comes into contact with the resilient member 329, which continues until the second position is reached where the cassette is loaded as shown in Figure 19. In this case, since the resilient member 329 is imparted with a rotation urging force in the direction of an arrow c opposite to the direction of rotation of the drive arm 319, the moving speed of the cassette holder 314 is reduced before arrival at the second position.

The resilient member 329 is prevented from coming away from the drive arm 319 due to the provision fo the guide portion 319a on the drive arm 319.

Usually, when the guide pins 316, 316′ of the cassette holder 314 are shifted from the first guide groove portion 318a to the second guide groove portion 318b, the weight of the cassette holder 314 containing the cassette, which has no effect during the movement along the first guide groove portion 318a, is added in the direction toward the second position of the cassette, with the result that, owing to the backlash of the gears of the driving means constituted by the drive arm 319, 319′ and the like, the cassette holder 314 is moved (or rather dropped) abruptly toward the second position of the cassette, thus making a loud noise. However, according to the present embodiment, since the resilient members 329, 329′ serve to impart a rotation urging force in the direction opposite to the direction of rotation of the drive arms 319, 319′ (as indicated by arrow c), the speed of the cassette holder 314 is reduced before arrival at the second position, thus preventing the abrupt drop and, accordingly, reducing the noise level remarkably.

Figure 20 shows a fourth embodiment of the present invention, in which reference numerals 435 and 435′ denote resilient members provided on shaft portions 436, 436′ which project from side plates 426, 426′. Reference numerals 437 and 437′ denote stops for one end of the resilient members 435, 435′, which stops also project from the side plates 426, 426′. The other ends of the resilient member 435, 435′ are engaged with stops 432, 432′ which also project from the side plates 426, 426′. The resilient members 435, 435′ are normally imparted with a rotation urging force in a direction toward the stops 437, 437′.

Reference numerals 435a and 435a′ denote bent portions extending from the resilient members 435, 435′ so as to prevent the end surfaces of the resilient member 435, 435′ from coming into contact with the drive arms 407, 408′.

Reference numerals 409a and 409a′ denote guide members formed integrally with the drive arms 408, 408′. The guide members 439a, 409a′ comprise grooves formed in the forward ends of the drive arms 408, 408′, so that the resilient members 435, 435′ are guided by the drive arms 408, 408′ and, accordingly, are capable of imparting a rotation urging force in the direction of arrow c while being prevented from coming away from the drive arms 408, 408′.

As has been described above, according to the present invention, by virtue of adoption of a very simple and inexpensive construction, no deviation in phase occurs between the racks on insertion of a cassette even if the user continues to push in the cassette loading-in operation, the cassette is able to be inserted smoothly and loaded smoothly and softly as well as ejected smoothly owing to the provision of the supplementary force imparting means.

## Claims

1. A cassette loading apparatus comprising:- a cassette holder (26, 201, 314) for releasably holding a cassette, the holder having side walls (27, 27′; 204, 204′; 315, 315′) with guide pins (28, 28′; 205, 205′; 316, 316′; 405, 405′) projecting therefrom; side plates (29, 29′; 226, 226′; 317, 317′; 426, 426′) disposed to the sides of the holder, each side plate having a guide groove (30, 30′; 227, 227′; 318, 318′; 427, 427′) comprising a first guide groove portion (30a, 227a, 318a, 427a) and a second guide groove portion (30b, 227b, 318b, 427b) extending from an end of said first portion substantially orthogonally thereto, wherein each guide pin projects into a respective guide groove to enable the holder to be reciprocated relative to the side plates between a first position in which a cassette can be loaded into or unloaded from the holder and a second position where recording onto or reproduction from a loaded cassette can be effected; drive means including rotatable drive arms (31, 31′; 208, 208′; 319, 319′; 408, 408′) rotatably supported by said side plates, said drive arms engaging with respective guide pins; a power output means (34, 40; 215, 217; 228, 428, 415, 234, 434, 417) having a toothed portion (37, 217, 325, 417) in meshing engagement with a gear (36, 206, 322, 406) of said drive means and another toothed portion (48, 325) for meshing engagement with a gear (47, 212, 328, 412) of a power source (47, 210, 410), whereby movement of the drive gear is communicated via the power output means and drive means to the rotatable drive arms to cause the holder to move between its first and second positions, the loading apparatus being characterised in that it includes a supplementary force imparting means (44, 45, 46, 61; 229, 230, 231, 232; 329, 330, 331, 332, 432, 435, 436, 437) provided on at least one of said side plates, the supplementary force imparting means having a resilient member (45, 230, 329, 435) which imparts a force to a drive arm which displaces it during at least a latter part of the holder′s movement from its first position to its second position, said force acting against the movement of the holder to slow its movement towards its second position and the resilient member stores a rotating urging force which it imparts to the holder to supplement movement of the holder from its second position towards its first position.

2. A cassette loading apparatus according to claim 1, characterised in that the power output means comprises a rack (323) having a toothed portion (325) in meshing engagement with a gear (322) integrally formed with one of said drive arms (319, 319′) and another toothed portion (326) for meshing engagement with the gear (328) of the power source.

3. A cassette loading apparatus according to claim 1, characterised in that the power output means comprises a clutch means consisting of a power output member (34; 215, 217; 415, 417) having a toothed portion (37, 217, 417) in meshing engagement with the gear (36, 206, 406) of the drive means, a power input member (40, 228, 428) having a toothed portion (48) for meshing engagement with the gear of the power source, the power input member being movable relative to said power output member, a resilient member (41, 234, 434) linking said power input member and power output member and a first engaging portion (43; 223, 223′) of said power output member being in engagement with a second engagement portion (42; 233, 233′) of said power input member.

4. A cassette loading apparatus according to claim 3, characterised in that the clutch means consists of a first rack (34) movable along a guide member (35) provided on at least one of said side plates (29, 29′), and a second rack (40) which has a second engaging portion (42) engaged with a first engaging portion (43) provided on said first rack (34), said second rack (40) has a toothed portion (48) at such a position thereon that it is prevented from meshing engagement with a gear (36) forming part of said drive means while being movable along said guide member (35) in a mutually slidable relationship with said first rack (34) linked to it by means of the first resilient member (41).

5. A cassette loading apparatus according to claim 3, characterised in that the clutch means has a power output member (215, 217; 415, 417) rotatably provided on at least one of said side plates (226, 226′), and a power input member (228, 428) which has a second engaging portion (233, 233′) engaged with a first engaging portion (223, 223′) provided on said power output member and is rotatable in coaxial relationship with said power output member and linked to it by the first resilient member (234, 434) so as to receive the power from a driving source (210, 410) while being arranged to be prevented from meshing engagement with a gear (206, 406) forming a part of said drive means.

6. A cassette loading apparatus according to any of claims 3 to 5, characterised in that a resilient force of said first resilient member (41, 234, 434) and a force imparted by said supplementary force imparting means are suitably set so as to satisfy an inequality of F_{C} < F_{A} + F_{B} when said cassette holder is moved from its second position to its first position, where a force exerted by the supplementary force imparting means on the cassette holder is F_{A′} a force exerted on the cassette holder due to resiliency of the first resilient member is F_{B′} and a load generated at the time of moving the cassette holder containing the cassette is F_{C}.

7. A cassette loading apparatus according to any preceding claim, characterised in that the supplementary force imparting means is kept in resilient contact with the drive arm (31, 208, 319, 408) during the movement of the guide pins (28, 28′; 29, 29′; 316, 316′; 405, 405′) from a position in the first guide groove portion located near the second guide groove portion to a terminal end of the second guide groove portion.

8. A cassette loading apparatus according to claim 1, characterised in that a pair of drive arms (31, 31′; 319, 319′) are provided on both sides of the cassette holder (26, 314) and are connected to each other by means of a shaft (32, 320), while the supplementary force imparting means is provided on the side plate (29, 317) on which the power input member is arranged.

9. A cassette loading apparatus according to claims 1 to 7, characterised in that the supplementary force imparting means includes a control lever (44, 229) so that a portion of the drive arm comes into contact with a portion of said control lever before arrival of the drive arm at the terminal end of its stroke of rotative movement for bringing the cassette holder to the second position.

10. A cassette loading apparatus according to claim 1, characterised in that the second resilient member (329, 435) of the supplementary force imparting means has a bent portion (329a), integrally formed at one end thereof so that a portion of the drive arm comes into contact with said bent portion before arrival of said drive arm at the terminal end of its stroke of rotative movement for bringing the cassette holder to the second position.

11. A cassette loading apparatus according to claim 10, characterised in that the drive arm is integrally provided with a guide member (319a) so as to prevent the second resilient member (329) from coming off from said drive arm at least during exertion of the rotation urging force from said second resilient member onto said drive arm.

12. A cassette loading apparatus according to claim 11, characterised in that the guide member has a groove which is formed in the drive arm, said groove serving to retain the second resilient member.

## Patentansprüche

1. Kassettenladevorrichtung, umfassend: - einen Kassettenhalter (26, 201, 314) zum lösbaren Halten einer Kassette, wobei der Halter Seitenwände (27, 27′; 204, 204′; 315, 315′) mit von diesen abstehenden Führungsstiften (28, 28′; 205, 205′; 316, 316′; 405, 405′) aufweist; Seitenplatten (29, 29′; 226, 226′; 317, 317′; 426, 426′), die an den Seiten des Halters angeordnet sind, wobei jede Seitenplatte eine Führungsnut (30, 30′; 227, 227′; 318, 318′; 427, 427′) aufweist, die einen ersten Führungsnutbereich (30a, 227a, 318a, 427a) und einen zweiten Führungsnutbereich (30b, 227b, 318b, 427b) umfaßt, der sich von einem Ende des ersten Bereichs im wesentlichen rechtwinklig zu diesem erstreckt, wobei jeder Führungsstift in eine zugeordnete Führungsnut hineinragt, damit der Halter gegenüber den Seitenplatten zwischen einer ersten Stellung, in der eine Kassette in den Halter geladen oder aus diesem entladen werden kann, und einer zweiten Stellung hin- und herbewegbar ist, in der eine Aufzeichnung auf oder eine Wiedergabe von der geladenen Kassette durchgeführt werden kann; Antriebsmittel mit drehbaren Antriebsarmen (31, 31′; 208, 208′; 319, 319′; 408, 408′), die von den Seitenplatten drehbar abgestützt sind, wobei die Antriebsarme mit zugeordneten Führungsstiften in Eingriff stehen; Leistungsabgabemittel (34, 40; 215, 217; 228, 428, 415, 234, 434, 417), die einen gezahnten Bereich (37, 217, 325, 417) aufweisen, der mit einem Zahnrad (36, 206, 322, 406) der Antriebsmittel in Eingriff steht, und einen anderen gezahnten Bereich (48, 325) zum Eingriff mit einem Zahnrad (47, 212, 328, 412) einer Leistungsquelle (47, 210, 410) aufweisen, wodurch die Bewegung des Antriebszahnrades über die Leistungsabgabemittel und Antriebsmittel an die drehbaren Antriebsarme übertragen wird, um den Halter zwischen seiner ersten und zweiten Stellung zu bewegen, wobei die Ladevorrichtung dadurch **gekennzeichnet** ist, daß sie zusätzliche Kraftaufbringmittel (44, 45, 46, 61; 229, 230, 231, 232; 329, 330, 331, 332; 432, 435, 436, 437) umfaßt, die an mindestens einer der Seitenplatten vorgesehen sind, wobei die zusätzlichen Kraftaufbringmittel ein elastisches Teil (45, 230, 329, 435) aufweisen, das eine Kraft auf einen Antriebsarm ausübt, der dieses zumindest während des letzten Teils der Bewegung des Halters von seiner ersten Stellung in seine zweite Stellung verlagert, wobei diese Kraft der Bewegung des Halters entgegenwirkt, um dessen Bewegung in seine zweite Stellung zu verlangsamen und wobei das elastische Teil eine Drehantriebskraft speichert, die es auf den Halter ausübt zur Unterstützung der Bewegung des Halters von seiner zweiten Stellung in seine erste Stellung.

2. Kassettenladevorrichtung nach Anspruch 1, dadurch **gekennzeichnet**, daß die Leistungsabgabemittel eine Zahnstange (323) umfassen, die einen gezahnten Bereich (325) aufweist, der mit einem an einem der Antriebsarme (319, 319′) befestigten Zahnrad (322) in Eingriff steht, und einen anderen gezahnten Bereich (326) zum Eingriff mit dem Zahnrad (328) der Leistungsquelle aufweist.

3. Kassettenladevorrichtung nach Anspruch 1, dadurch **gekennzeichnet**, daß die Leistungsabgabemittel eine Kupplungseinrichtung umfassen, bestehend aus einem Leistungsabgabeteil (34; 215, 217; 415, 417), das einen mit dem Zahnrad (36, 206, 406) der Antriebsmittel in Eingriff stehenden gezahnten Bereich (37, 217, 417) aufweist, einem Leistungszuführteil (40, 228, 428), das einen gezahnten Bereich (48) zum Eingriff mit dem Zahnrad der Leistungsquelle aufweist, wobei das Leistungszuführteil gegenüber dem Leistungsabgabeteil bewegbar ist, einem elastischen Teil (41, 234, 434), das das Leistungszuführteil und das Leistungsabgabeteil verbindet, und einem ersten Eingriffsbereich (43; 223, 223′) des Leistungsabgabeteils, der mit einem zweiten Eingriffsbereich (42; 233, 233′) des Leistungszuführteils in Eingriff steht.

4. Kassettenladevorrichtung nach Anspruch 3, dadurch **gekennzeichnet**, daß die Kupplungseinrichtung eine erste Zahnstange (34), die entlang einem an mindestens einer der Seitenplatten (29, 29′) angeordneten Führungsteil (35) bewegbar ist, und eine zweite Zahnstange (40) umfaßt, die einen zweiten Eingriffsbereich (42) hat, der mit einem an der ersten Zahnstange (34) angeordneten ersten Eingriffsbereich (43) in Eingriff steht, wobei die zweite Zahnstange (40) einen gezahnten Bereich (48) an einer solchen Stelle derselben aufweist, daß er vor einem Eingriff mit einem einen Teil der Antriebsmittel bildenden Zahnrad (36) geschützt ist, während er längs des Führungsteils (35) in einer gegenseitig verschiebbaren Beziehung mit der ersten Zahnstange (34) bewegbar ist, die mit diesem durch das erste elastische Teil (41) verbunden ist.

5. Kassettenladevorrichtung nach Anspruch 3, dadurch **gekennzeichnet**, daß die Kupplungseinrichtung ein Leistungsabgabeteil (215, 217; 415, 417), das an mindestens einer der Seitenplatten (226, 226′) drehbar angeordnet ist, und ein Leistungszuführteil (228, 428) umfaßt, das einen zweiten Eingriffsbereich (233, 233′) aufweist, der mit einem an dem Leistungs abgabeteil angeordneten ersten Eingriffsbereich (223, 223′) in Eingriff steht und zu dem Leistungsabgabeteil koaxial verdrehbar und mit diesem durch das erste elastische Teil (234, 434) verbunden ist, um die Leistung von einer Leistungsquelle (210, 410) zu empfangen, während er so angeordnet ist, daß er vor einem Eingriff mit einem einen Teil der Antriebsmittel bildenden Zahnrad (206, 406) geschützt ist.

6. Kassettenladevorrichtung nach einem der Ansprüche 3 bis 5, dadurch **gekennzeichnet**, daß eine elastische Kraft des ersten elastischen Teils (41, 234, 434) und eine von den zusätzlichen Kraftaufbringmitteln ausgeübte Kraft so eingestellt werden, daß sie die Ungleichung F_{C} < F_{A} + F_{B} erfüllen, wenn der Kassettenhalter von seiner zweiten Stellung in die erste Stellung bewegt wird, wobei eine von den zusätzlichen Kraftaufbringmitteln auf den Kassettenhalter ausgeübte Kraft F_{A} ist, eine infolge der Elastizität des ersten elastischen Teils auf den Kassettenhalter ausgeübte Kraft F_{B} ist und eine zum Zeitpunkt der Bewegung des die Kassette enthaltenden Kassettenhalters erzeugte Kraft F_{C} ist.

7. Kassettenladevorrichtung nach einem der vorhergehenden Ansprüche, dadurch **gekennzeichnet**, daß die zusätzlichen Kraftaufbringmittel mit dem Antriebsarm (31, 208, 319, 408) in elastischem Eingriff gehalten sind während der Bewegung der Führungsstifte (28, 28′; 29, 29′; 316, 316′; 405, 405′) von einer Stellung in dem ersten Bereich der Führungsnut nahe dem zweiten Bereich der Führungsnut bis zum Ende des zweiten Bereichs der Führungsnut.

8. Kassettenladevorrichtung nach Anspruch 1, dadurch **gekennzeichnet**, daß zwei Antriebsarme (31, 31′; 319, 319′) auf beiden Seiten des Kassettenhalters (26, 314) angeordnet und durch eine Welle (32, 320) miteinander verbunden sind, wobei die zusätzlichen Kraftaufbringmittel an derjenigen Seitenplatte (29, 317) vorgesehen sind, an der das Leistungszuführteil angeordnet ist.

9. Kassettenladevorrichtung nach Anspruch 1 bis 7, dadurch **gekennzeichnet**, daß die zusätzlichen Kraftaufbringmittel einen Steuerhebel (44, 229) umfassen, so daß ein Bereich des Antriebsarms mit einem Bereich des Steuerhebels in Berührung kommt, bevor der Antriebsarm am Ende seines Drehbewegungshubes ankommt, um den Kassettenhalter in die zweite Stellung zu bringen.

10. Kassettenladevorrichtung nach Anspruch 1, dadurch **gekennzeichnet**, daß das zweite elastische Teil (329, 435) der zusätzlichen Kraftaufbringmittel einen umgebogenen Bereich (329a) aufweist, der an einem Ende desselben einstückig ausgebildet ist, so daß ein Bereich des Antriebsarms mit diesem umgebogenen Bereich in Berührungg kommt, bevor der Antriebsarm am Ende seines Drehbewegungshubes ankommt, um den Kassettenhalter in die zweite Stellung zu bringen.

11. Kassettenladevorrichtung nach Anspruch 10, dadurch **gekennzeichnet**, daß ein Führungsteil (319a) mit dem Antriebsarm einstückig ausgebildet ist, um das zweite elastische Teil (329) zumindest während der Ausübung der Drehantriebskraft von dem zweiten elastischen Teil auf den Antriebsarm an einer Trennung von dem Antriebsarm zu hindern.

12. Kassettenladevorrichtung nach Anspruch 11, dadurch **gekennzeichnet**, daß das Führungsteil eine in dem Antriebsarm aus gebildete Nut hat, wobei diese Nut zum Halten des zweiten elastischen Teils dient.

## Revendications

1. Appareil de chargement de cassette comportant :
- un dispositif de retenue (26, 201, 314) de cassette destiné à retenir de manière amovible une cassette, le dispositif de retenue comportant des parois latérales (27, 27′; 204, 204′; 315, 315′) munies de tiges de guidage (28, 28′; 205, 205′; 316, 316′; 405, 405′) faisant saillie à partir de celles-ci; des plaques latérales (29, 29′; 226, 226′; 317, 317′; 426, 426′) disposées sur les côtés du dispositif de retenue, chaque plaque latérale ayant une gorge de guidage (30, 30′; 227, 227′; 318, 318′; 427, 427′) comportant une première partie (30a, 227a, 318a, 427a) de gorge de guidage et une seconde partie (30b, 227b, 318b, 427b) de gorge de guidage s'étendant depuis une extrémité de ladite première partie d'une manière à peu près orthogonale par rapport à celle-ci, dans lequel chaque tige de guidage fait saillie dans une gorge de guidage respective pour permettre au dispositif de retenue de se déplacer en va-et-vient par rapport aux plaques latérales entre une première position dans laquelle une cassette peut être chargée à l'intérieur du dispositif de retenue ou peut être déchargée à partir de celui-ci et une seconde position dans laquelle un enregistrement sur la cassette chargée ou une reproduction à partir de celle-ci peuvent être effectués; des moyens d'entraînement comportant des bras d'entraînement rotatifs (31, 31′, 208, 208′; 319, 319′; 408, 408′) supportés de manière rotative par lesdites plaques latérales, lesdits bras d'entraînement étant en contact avec les tiges de guidage respectives; des moyens (34, 40; 215, 217; 228, 428, 415, 234, 434, 417) formant sortie de puissance ayant une partie dentée (37, 217, 325, 417) en contact engrenant avec un engrenage (36, 206, 322, 406) desdits moyens d'entraînement et une autre partie dentée (48, 326) pour un contact engrenant avec un engrenage (47, 212, 328, 412) d'une source d'énergie (49, 210, 410), de sorte que le mouvement de l'engrenage entraînant est communiqué via les moyens formant sortie de puissance et via les moyens d'entraînement aux bras d'entraînement rotatifs pour amener le dispositif de retenue à se déplacer entre ses première et seconde positions, l'appareil de chargement étant caractérisé en ce qu'il comporte des moyens (44, 45, 46, 61; 229, 230, 231, 232; 329, 330, 331, 332, 432, 435, 436, 437) de transmission d'une force supplémentaire agencés sur au moins une desdites plaques latérales, les moyens de transmission d'une force supplémentaire comportant un élément élastique (45, 230, 329, 435) qui transmet une force à un bras d'entraînement, laquelle déplace celui-ci pendant au moins une dernière partie du mouvement du dispositif de retenue depuis sa première position vers sa seconde position, ladite force agissant à l'encontre du mouvement du dispositif de retenue pour ralentir son mouvement dans la direction de sa seconde position et l'élément élastique emmagasine une force tournante de rappel qu'il transmet au dispositif de retenue pour compléter le mouvement du dispositif de retenue depuis sa seconde position vers sa première position.

2. Appareil de chargement de cassette selon la revendication 1, caractérisé en ce que les moyens formant sortie de puissance comportent une crémaillère (323) comportant une partie dentée (325) en contact engrenant avec un engrenage (322) formé venu de matière avec un desdits bras d'entraînement (319, 319′) et une autre partie dentée (326) pour un contact engrenant avec l'engrenage (328) de la source d'énergie.

3. Appareil de chargement de cassette selon la revendication 1, caractérisé en ce que les moyens formant sortie de puissance comportent des moyens d'embrayage constitués d'un élément (34; 215, 217; 415, 417) formant sortie de puissance comportant une partie dentée (37, 217, 417) en contact engrenant avec l'engrenage (36, 206, 406) des moyens d'entraînement, un élément (40, 228, 428) formant entrée de puissance comportant une partie dentée (48) pour un contact engrenant avec l'engrenage de la source d'énergie, l'élément formant entrée de puissance étant mobile par rapport audit élément formant sortie de puissance, un élément élastique (41, 234, 434) reliant ledit élément formant entrée de puissance et l'élément formant sortie de puissance et une première partie de prise (43; 223, 223′) dudit élément formant sortie de puissance étant en prise avec une seconde partie de prise (42; 233, 233′) dudit élément formant entrée de puissance.

4. Appareil de chargement de cassette selon la revendication 3, caractérisé en ce que les moyens d'embrayage sont constitués d'une première crémaillère (34) mobile le long d'un élément de guidage (35) agencé sur au moins une desdites plaques latérales (29, 29′), et d'une seconde crémaillère (40) qui comporte une seconde partie de prise (42) en prise avec une première partie de prise (43) agencée sur ladite première crémaillère (34), ladite seconde crémaillère (40) comportant une partie dentée (48) située au niveau d'un emplacement tel que celle-ci ne peut pas venir en contact engrenant avec un engrenage (36) formant partie desdits moyens d'entraînement tout en étant mobile le long dudit élément de guidage (35) dans une relation de coulissement mutuel avec ladite première crémaillère (34) reliée à celle-ci par l'intermédiaire du premier élément élastique (41).

5. Appareil de chargement de cassette selon la revendication 3, caractérisé en ce que les moyens d'embrayage comportent un élément (215, 217; 415, 417) formant sortie de puissance agencé de manière rotative sur au moins une desdites plaques latérales (226, 226′), et un élément (228, 428) formant entrée de puissance qui comporte une seconde partie de prise (233, 223′) en prise avec une première partie de prise (223, 223′) agencée sur ledit élément formant sortie de puissance et qui peut tourner selon une relation coaxiale avec ledit élément formant sortie de puissance et est relié à celui-ci par l'intermédiaire du premier élément élastique (234, 434) de manière à recevoir la puissance provenant d'une source d'entraînement (210, 410), tout en étant agencé de manière à ne pas pouvoir venir en contact engrenant avec un engrenage (206, 406) formant une partie desdits moyens d'entraînement.

6. Appareil de chargement de cassette selon l'une quelconque des revendications 3 à 5, caractérisé en ce qu'une force élastique provenant dudit premier élément élastique (41, 234, 434) et une force transmise par lesdits moyens de transmission d'une force supplémentaire sont établies de manière adaptée pour satisfaire l'inégalité F_{C} < F_{A} + F_{B} lorsque ledit dispositif de retenue de cassette est déplacé depuis sa seconde position vers sa première position, où la force exercée par les moyens de transmission d'une force supplémentaire sur le dispositif de retenue de cassette est égale à F_{A}, la force exercée sur le dispositif de retenue de cassette due à l'élasticité du premier élément élastique est égale à F_{B} et la charge produite pendant le déplacement du dispositif de retenue de cassette contenant la cassette est égale à F_{C}.

7. Appareil de chargement de cassette selon l'une quelconque des revendications précédentes, caractérisé en ce que les moyens de transmission d'une force supplémentaire sont maintenus en contact élastique avec le bras d'entraînement (31, 208, 319, 408) pendant le déplacement des tiges de guidage (28, 28′; 205, 205′; 316, 316′; 405, 405′) à partir d'une position située à proximité de la seconde partie de gorge de guidage dans la première partie de gorge de guidage vers une extrémité terminale de la seconde partie de gorge de guidage.

8. Appareil de chargement de cassette selon la revendication 1, caractérisé en ce que deux bras d'entraînement (31, 31′; 319, 319′) sont agencés des deux côtés du dispositif de retenue (26, 314) de cassette et sont reliés l'un à l'autre par l'intermédiaire d'un arbre (32, 320), tandis que les moyens de transmission d'une force supplémentaire sont agencés sur la plaque latérale (29, 317) sur laquelle est agencé l'élément formant entrée de puissance.

9. Appareil de chargement de cassette selon les revendications 1 à 7, caractérisé en ce que les moyens de transmission d'une force supplémentaire comportent un levier de commande (44, 229) de sorte qu'une partie du bras d'entraînement vient en contact avec une partie dudit levier de commande avant l'arrivée du bras d'entraînement au niveau de l'extrémité terminale de sa course de déplacement rotatif pour amener le dispositif de retenue de cassette vers la seconde position.

10. Appareil de chargement de cassette selon la revendication 1, caractérisé en ce que le second élément élastique (329, 435) des moyens de transmission d'une force supplémentaire comporte une partie recourbée (329a), formée venue de matière au niveau d'une première extrémité de celui-ci de sorte qu'une partie du bras d'entraînement vienne en contact avec ladite partie recourbée avant l'arrivée dudit bras d'entraînement au niveau de l'extrémité terminale de sa course de déplacement rotatif pour amener le dispositif de retenue de cassette vers la seconde position.

11. Appareil de chargement de cassette selon la revendication 10, caractérisé en ce que le bras d'entraînement comporte un élément de guidage (319a) venu de matière pour empêcher le second élément élastique (329) de sortir dudit bras d'entraînement au moins pendant l'application de la force tournante de rappel à partir dudit second élément élastique sur ledit bras d'entraînement.

12. Appareil de chargement de cassette selon la revendication 11, caractérisé en ce que l'élément de guidage comporte une gorge qui est formée dans le bras d'entraînement, ladite gorge servant à retenir le second élément élastique.
